(19) Europäisches Patentamt
European Patent Office
Office européen des brevets

(11) **EP 3 560 996 B1**

(12) **FASCICULE DE BREVET EUROPEEN**

(45) Date de publication et mention
de la délivrance du brevet:
**05.04.2023   Bulletin 2023/14**

(21) Numéro de dépôt: **19171423.7**

(22) Date de dépôt: **26.04.2019**

(51) Classification Internationale des Brevets (IPC):
**C08L 67/02** *(2006.01)*      **C08L 67/04** *(2006.01)*

(52) Classification Coopérative des Brevets (CPC):
(C-Sets disponibles)
**C08L 67/02; C08L 67/04**                      (Cont.)

(54) **COMPOSITION COMPRENANT UN (CO)POLYESTER RIGIDE ET UN (CO)POLYESTER FLEXIBLE, PROCEDE DE PREPARATION ET UTILISATION EN GEOTEXTILE ET POUR ENGINS DE PECHE**

ZUSAMMENSETZUNG, DIE EINE STARREN (CO)POLYESTER UND EINEN FLEXIBLEN (CO)POLYESTER UMFASST, HERSTELLUNGSVERFAHREN UND VERWENDUNG IN GEOTEXTILIEN UND FÜR FISCHFANGGERÄTE

COMPOSITION COMPRISING A RIGID (CO)POLYESTER AND A FLEXIBLE (CO)POLYESTER, METHOD FOR PREPARING SAME AND USE THEREOF IN GEOTEXTILE AND FOR FISHING MACHINERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.04.2018   FR 1800455**

(43) Date de publication de la demande:
**30.10.2019   Bulletin 2019/44**

(73) Titulaire: **ICCI SEA**
**56260 Larmor-Plage (FR)**

(72) Inventeurs:
• **MATHEL, Vincent**
**56260 LARMOR-PLAGE (FR)**
• **CHAUVEL, Marie**
**56260 LARMOR PLAGE (FR)**

(74) Mandataire: **Oak & Fox**
**94, rue La Fayette / Esc. D**
**75010 Paris (FR)**

(56) Documents cités:
**FR-A1- 3 040 389        KR-B1- 100 993 635**
**US-A1- 2014 079 898**

(52) Classification Coopérative des Brevets (CPC):
(Cont.)

C-Sets
**C08L 67/02, C08L 67/02, C08L 31/04;**
**C08L 67/04, C08L 67/02, C08L 31/04**

**Description**

La présente invention se rapporte au domaine des compositions comprenant des (co)polyesters biodégradables, ainsi qu'aux articles fabriqués à partir de ces compositions, de préférence obtenus par extrusion filage.

Art antérieur

La mondialisation, la société de consommation et l'augmentation de la densité de population sont autant de facteurs qui amènent les entreprises à une forte production de matières plastiques obtenues à partir de composés dérivés du pétrole, encore appelées « matières pétro-sourcées ».

Ce sont par exemple les polyoléfines tels que le polyéthylène (PE) et les polypropylènes (PP), les polyamides tel que polyamide 6 (Nylon), les polyesters tels que le polytéréphtalate de butylène (PBT), auxquels sont ajoutés des additifs modifiant leurs propriétés.

Ces articles présentent généralement de bonnes propriétés physiques, ont une longue durée de vie et sont en particulier adaptés à une utilisation en milieu marin. En 2014, la production mondiale de ces matières pétro-sourcées s'élevait à environ 311 millions de tonnes, dont seulement une infime partie est recyclée.

La pollution des océans par les matières pétro-sourcées suscitées est particulièrement préoccupante. La quantité de plastique pétro-sourcé dans les océans est estimé à 270 000 tonnes. Ces plastiques pétro-sourcées vont directement et durablement (parfois pendant des centaines d'années) impacter et fragiliser le biote, par exemple en participant à la migration d'espèces accrochées à leurs structures durant leurs dérives dans les océans, en intégrant le cycle alimentaire de la faune aquatique, en libérant leurs additifs ou composés polluants suite à leur fragmentation ou décomposition en particules, en contribuant à la perturbation du cycle du carbone et à l'acidification des océans.

Afin de limiter la pollution, des filières de recyclage ont été mises en place pour assurer la collecte, le traitement et potentiellement la réutilisation des articles en matières pétro-sourcées usagés. De telles filières sont généralement coûteuses à mettre en oeuvre et ne permettent que le recyclage partiel des articles usagés. Dans les faits, seuls deux types de plastiques sont recyclés, à savoir les PET (utilisés notamment pour la fabrication de bouteilles transparentes ou colorées) et les PEHD (utilisés notamment pour la fabrication de bouteilles opaques). Les autres plastiques comme le PVC, les polyamides qui sont principalement utilisés dans le mono-filaments, ou celui des sacs et films de supermarché ne sont pas recyclés, du fait du coût prohibitif du recyclage. De même, il est très difficile de recycler des articles intégrants des nanoparticules comme charges. Ces articles sont brûlés dans des incinérateurs pour produire de l'énergie : on parle alors de « revalorisation énergétique ». Cependant, le plastique n'est pas recyclable à l'infini : le recycler ne fait que retarder le moment où il sera brûlé.

Dans ce contexte, il semble primordial de proposer des matériaux alternatifs comme les plastiques biodégradables et/ou biosourcés permettant de limiter la dépendance humaine aux énergies fossiles, de minimiser la quantité de composés chimiques polluants, réduire l'impact carbone des produits fabriqués, résoudre de nombreux problèmes d'encombrement des décharges, d'émission de gaz nocifs au cours d'incinération -grâce à leur compostabilité- et enfin de palier aux impacts négatifs des plastiques pétro-sourcés sur la faune et la flore et plus globalement l'écosystème en particulier marin.

Depuis déjà plusieurs décennies, d'importantes recherches universitaires et industrielles sont axées sur le développement de matériaux biosourcés et/ou biodégradables, comme par exemple, la famille des polyesters biodégradables, la famille des polyhydroxyalcanoates, la famille des agro-polymères.

Cependant les matériaux disponibles sur le marché ne sont pas toujours adaptés à la production d'articles pour des applications techniques ou pour des utilisations pendant une durée de vie raisonnable dans des environnements « agressifs ». Parmi ces articles dits « techniques » on citera plus particulièrement les engins (fils) de pèche destinés à être utilisés dans de l'eau de mer (qui est un milieu bactérien, sous un taux d'humidité maximum, et salinisé) ou encore les géotextiles utilisés sur les plages dans des zones à forte exposition aux rayons ultraviolets.

En outre ces matériaux sont souvent difficiles à mettre en oeuvre, notamment dans des procédés d'extrusion-filage, calandrage, moussage, soufflage souvent parce qu'ils ont été fragilisés par dégradation thermique, ou à cause des mauvaises performances des mélanges qui les composent.

Pour limiter l'impact environnemental des matières plastiques et augmenter leur champ d'application, il est donc nécessaire de fournir des compositions en matériaux biodégradables présentant à la fois des propriétés physiques, et notamment de résistance, acceptables notamment pour des applications techniques dans des conditions environnementales « agressives ».

La présente invention vise à répondre à ce besoin.

Les (co)polyesters biodégradables aliphatiques et aromatiques et notamment leurs mélanges sont considérés comme des voies prometteuses. Cependant la compatibilité des (co)polyesters biodégradables aliphatiques et aromatiques est naturellement faible et cette faiblesse est encore accentuée quand leurs masses molaires sont élevées. Les mélanges obtenus présentent généralement des résultats peu satisfaisants en termes de morphologie microstructurale, homogénéité, distribution, dispersion, miscibilité et/ou interface ainsi qu'à de mauvaises aptitudes à être mis en oeuvre par extrusion, ce qui conduit à des articles qui ne présentent pas les caractéristiques et propriétés physiques souhaitées.

Les mélanges de (co)polyesters biodégradables sont déjà connus notamment dans les demandes WO99/23163 ou encore JP2011-234718, cependant ces demandes ne mentionnent pas la composition selon l'invention qui associe des (co)polyesters biodégradables particuliers avec un polymère de vinyle et présente des propriétés améliorées notamment en termes de propriétés mécaniques et d'aptitude à une mise en oeuvre industrielle.

En particulier JP2011-234718 ne divulgue pas de composition comprenant de 0,5 à 10 % en poids d'un polymère de vinyle.

La demande de brevet FR 3 040 389 A1 divulgue des compositions comprenant des copolyesters rigides et du polyacétate de vinyle, cette demande de brevet ne divulgue pas des compositions comprenant au moins un (co)polyester biodégradable rigide, au moins un (co)polyester biodégradable flexible et un polymère de vinyle dans les proportions selon la présente invention.

Ainsi les auteurs de la présente invention ont mis en évidence une composition à base de (co)polyesters biodégradables présentant à la fois de bonnes aptitudes à être mise en oeuvre à l'échelle industrielle tout en conservant des propriétés physiques, mécaniques satisfaisantes, notamment en termes de résistance, ladite composition permettant des utilisations prolongées dans des conditions particulièrement agressives.

La composition selon l'invention peut avantageusement être utilisée dans des applications techniques et spécifiques.

Résumé de l'invention

La présente invention a donc pour objet une composition, de préférence biodégradable, comprenant :

- de 40 à 90 %, de préférence de 50 à 90%, en poids d'au moins un (co)polyester biodégradable rigide, par rapport au poids total de la composition,
- de 10 à 49 % en poids d'au moins un (co)polyester biodégradable flexible, par rapport au poids total de la composition,
- de 0,5 à 10 % en poids d'un polymère de vinyle, par rapport au poids total de la composition, ladite composition étant telle que
- la différence des températures de fusion entre les deux (co)polyesters biodégradables présentant les températures de fusion les plus éloignées est inférieure à 25°C, de préférence inférieure à 15°C, de manière préférée inférieure à 10°C, les températures de fusion étant déterminées selon la norme ISO 3146,
- la différence des indices de fluidité à chaud entre les deux (co)polyesters biodégradables présentant les indices de fluidité à chaud les plus éloignés est inférieure à 5g/10min, de préférence inférieure à 3g/10min, les indices de fluidité à chaud étant déterminés selon la norme ISO 1133,

un (co)polyester rigide étant un polymère présentant un module de rigidité supérieur à 500 MPa, de préférence supérieur à 600 MPa et une élongation à la rupture inférieure à 300 %, de préférence inférieure à 250 %,

un (co)polyester flexible étant un polymère présentant un module de rigidité inférieur à 850 MPa, de préférence inférieur à 700 MPa et une élongation à la rupture supérieure à 100 %, de préférence supérieur à 200 %,

les modules de rigidité et les élongation à la rupture étant déterminés selon la norme NF EN ISO 527-1,

lorsque la composition comprend un (co)polyester biodégradable présentant un module de rigidité compris entre 500 et 850 MPa et une élongation à la rupture comprise entre 100 et 300 %, alors elle contient aussi soit au moins un (co)polyester présentant un module de rigidité supérieur à 850 MPa et une élongation à la rupture inférieure à 100 % soit au moins un (co)polyester présentant un module de rigidité inférieur à 500 MPa et une élongation à la rupture supérieure à 300 %.

Les inventeurs ont montré que, de manière surprenante, l'association d'au moins deux (co)polyesters biodégradables particuliers et d'un polymère de vinyle permet l'obtention de compositions aux propriétés particulièrement avantageuses.

La composition selon l'invention est obtenue à partir de polymères biodégradables, par conséquent un premier avantage est qu'elle peut elle-même être biodégradable et/ou recyclable. La composition suivant l'invention permet la réalisation d'articles éco-responsables ayant un impact significativement moindre sur l'environnement par rapport à un article fabriqué à partir d'un plastique pétrochimique non biodégradable. Un autre avantage de la composition selon l'invention est qu'elle présente de bonnes propriétés d'aptitude au traitement en particulier par extrusion filage par voie fondue à la fois à l'échelle du laboratoire et à l'échelle industrielle, tout en conservant des propriétés physiques et mécaniques satisfaisantes voire très bonnes pour les applications envisagées.

Cette composition se distingue en outre par son homogénéité permettant avantageusement la préparation d'articles tels que des fils, mono-filaments, multi-filaments, fibres, crins, poils de cosmétique, filets, tresses, cordages, tissés, non-tissés, films, structures soufflées, profilés-tubes. Un autre avantage de cette composition réside dans ses propriétés physiques et mécaniques, en particulier sa résistance thermique et sa résistance à l'abrasion.

Selon un deuxième objet, l'invention vise un procédé de préparation de la composition selon l'invention comprenant une étape d'extrusion, de préférence une étape d'extrusion-filage par voie fondue avantageusement au moyen d'un extrudeuse mono-vis.

La composition selon l'invention présente une bonne filabilité, et permet l'obtention d'articles présentant une bonne solidité.

La présente invention vise encore l'utilisation de la composition selon l'invention pour la préparation d'articles choisis dans le groupe formé par les fils, mono-filaments, multi-filaments, fibres, crins, poils de cosmétique, filets notamment pour engins de pêche et/ou pour le domaine alimentaire, tresses, cordages, tissés, non-tissés, films, structures soufflées, profilés tubes.

Par conséquent un autre objet de l'invention est un article obtenu par extrusion filage d'une composition selon l'invention ou obtenu suivant le procédé selon l'invention, ledit article étant choisi dans le groupe formé par les fils, mono-filaments, multi-filaments, fibres, crins, poils de cosmétique, filets notamment pour engins de pêche et/ou alimentaire, tresses, cordages, tissés, non-tissés, films, structures soufflées, profilés tubes, de préférence les mono-filaments.

Ces articles se distinguent par leurs propriétés physiques remarquables en termes de ténacité, résistance à la rupture, force à la traction, rigidité, résistance thermique, résistance à l'abrasion.

En particulier, la composition selon l'invention est avantageusement utilisé pour l'élaboration de mono-filaments, avantageusement la composition selon la présente invention est utilisée dans ou pour la fabrication d'articles choisis parmi les engins de pêche ou les géotextiles notamment utilisables en milieu marin ou bord de mer, ces articles étant écoresponsables.

L'invention vise ainsi un article écoresponsable choisi parmi les engins de pêche ou les géotextiles.

On entend par « écoresponsable » la propriété de respecter au maximum la nature et l'environnement.

D'autres objets, aspects, avantages, propriétés de la présente invention sont présentés dans la description et les exemples qui suivent.

**Définitions**

Les définitions suivantes sont utilisées dans le présent texte.

Par « monofilament », on entend un fil unique obtenu par coagulation d'une coulée continue de liquide, comme dans la fabrication des textiles artificiels ou par filage avec étirage à froid, comme dans la fabrication des fils de polyamides, ou par extrusion avec étirage.

On entend par « biodégradable « ou « biodégradabilité », la propriété d'un matériau à se dégrader sous une activité biologique, par exemple sous l'action d'enzymes et/ou de microorganismes, par une réduction de sa masse molaire, en particulier la décomposition d'un composé chimique organique en dioxyde de carbone, eau et sels minéraux, des autres éléments présents (minéralisation) et l'apparition d'une nouvelle biomasse, sous l'action de micro-organismes en présence d'oxygène ; ou la décomposition en dioxyde de carbone, méthane, sels minéraux et création d'une nouvelle biomasse, en l'absence d'oxygène (elle est définie par la Norme Européenne EN 13432:2000 et son extension : NF 14995 ).

On entend par « recyclable », la récupération d'une partie ou de la totalité des constituants d'un matériau arrivé en fin de vie ou d'un matériau issu de résidus de fabrication afin de les réintroduire dans le cycle de production du même matériau ou d'un autre matériau.

On entend par « compostable » ou « compostabilité », un procédé qui consiste à placer des produits fermentiscibles dans des conditions (température, humidité, oxygénation, présence de micro-organismes du sol, etc.) permettant leur biodégradation. Pour être considéré comme compostable au sens de l'EN 13432, le matériau doit être dégradé à 90% de sa masse au bout de 6 mois dans un milieu de compost industriel ; la taille des résidus doit être inférieure à 2mm au bout de 3 mois de compostage ; et l'absence des effets écotoxiques doit être démontrée ainsi que la qualité agricole du compost obtenu.

On entend par « biosourcés » ou « *biosourcing* », les plastiques fabriqués à partir de ressources d'origine végétale telles que le maïs, le manioc, la pomme de terre, le bois, le coton, les algues, la canne à sucre, la betterave... le caractère biosourcé est défini par la norme ASTM D6866.

Description détaillée

**Composition**

La composition selon la présente invention comprend un mélange d'au moins deux (co)polyesters biodégradables.

Selon une première variante avantageuse, afin d'augmenter la contribution environnementale de la composition selon l'invention, au moins un des (co)polyesters biodégradables utilisés est biosourcé, de façon encore préférée tous les (co)polyesters biodégradables utilisés sont biosourcés.

Avantageusement, la composition selon la présente invention est biodégradable, de manière préférée elle est aussi compostable.

Les inventeurs estiment la biodégradation des articles obtenus à partir de ladite composition à une période allant de 5 à 30 ans suivant le milieu de dégradation et les aléas climatiques. Les mécanismes de biodégradation peuvent être biotiques sous l'action de microorganismes (hydrolyse enzymatique, oxydation enzymatique, dégradation par acides organiques...) ou abiotique, suivant le milieu (hydrolyse acido-basique, oxydation, photo-dégradation, thermo-dégradation, réaction acido-basique des substrats...) ; on cite plus particulièrement la dégradation hydrolytique, la dégradation enzymatique par des lipases, la dégradation par oxydation, la dégradation microbienne, la dégradation thermique.

Par ailleurs, les articles obtenus à partir de la composition selon l'invention peuvent dans des conditions bien particulières telles qu'un environnement chaud et humide, de type composts industriels définis selon les normes EN 13432, EN 14995, se dégrader beaucoup plus rapidement, de l'ordre de 90% biodégradé en 6 mois et ainsi présenter l'avantage de réduire les problématiques d'encombrement des décharges.

Avantageusement, les articles obtenus à partir de la composition selon la présente invention sont recyclables.

La composition selon la présente invention comprend un mélange d'au moins deux (co)polyesters biodégradables c'est-à-dire au moins un (co)polyester biodégradable rigide et au moins un (co)polyester biodégradable flexible, et un polymère de vinyle.

Par « (co)polyester rigide », au sens de la présente invention on entend un polymère présentant les caractéristiques suivantes :
un module de rigidité supérieur à 500 MPa, de préférence supérieur à 600 MPa et une élongation à la rupture inférieure à 300 %, de préférence inférieure à 250 %.

Avantageusement, le « (co)polyester rigide » utilisé selon la présente invention présente :

- un taux de cristallinité relatif allant de 15 à 80 % de préférence allant de 15 à 60 %, en poids par rapport au poids total dudit (co)polyester c'est-à-dire un polymère semi-cristallin ou
- une température de transition vitreuse (Tg) supérieure ou égale à la température ambiante.

Par « (co)polyester flexible », au sens de la présente invention on entend un polymère présentant les caractéristiques suivantes :
un module de rigidité inférieur à 850 MPa, de préférence inférieur à 700 MPa et une élongation à la rupture supérieure à 100 %, de préférence supérieur à 200 %.

Avantageusement, le « (co)polyester flexible » utilisé selon la présente invention présente :

- un taux de cristallinité relatif allant de 0 à 30 %, de préférence allant de 0 à 15 %, en poids par rapport au poids total dudit (co)polyester c'est-à-dire un polymère amorphe ou faiblement cristallin et
- une température de transition vitreuse (Tg) inférieure à la température ambiante.

La température ambiante est égale à 20°C.

En outre lorsque la composition selon l'invention comprend un (co)polyester biodégradable présentant un module de rigidité compris entre 500 et 850 MPa et une élongation à la rupture comprise entre 100 et 300 %, alors elle contient aussi soit au moins un (co)polyester présentant un module de rigidité supérieur à 850 MPa et une élongation à la rupture inférieure à 100 % soit au moins un (co)polyester présentant un module de rigidité inférieur à 500 MPa et une élongation à la rupture supérieure à 300 %.

Le module de rigidité, aussi nommé module d'élasticité ou module de Young, est calculé à partir d'un essai de traction d'une éprouvette entre deux mors et un déplacement à une vitesse contrôlée sur une machine d'essai mécanique. Il est déterminé à partir de la courbe linéaire de déformation élastique suivant la norme NF EN ISO 527-1 (2012-04-01) tel que :

$$\text{Module de rigidité (MPa)} = \frac{\sigma f2 - \sigma f1}{\varepsilon f2 - \varepsilon f1}$$

Où :

σf1 est la contrainte, exprimée en MPa, mesurée à la valeur de déformation de εf1= 0,0005.
σf2 est la contrainte, exprimée en MPa, mesurée à la valeur de déformation de εf2= 0,0025.

L'élongation à la rupture est calculée à partir d'un essai de traction d'une éprouvette entre deux mors et un déplacement à une vitesse contrôlée sur une machine d'essai mécanique. Elle est déterminée par la variation de longueur d'échantillon sur la longueur initiale de l'échantillon suivant la norme NF EN ISO 527-1 (2012-04-01), tel que :

$$\text{Elongation à la rupture (\%)} = \frac{\textit{Longueur de l'échantillon avant rupture} - \textit{Longueur initiale de l'échantillon}}{\textit{Longueur initiale de l'échantillon}}$$

Ainsi la composition selon la présente invention comprend au moins un (co)polyester biodégradable rigide et au moins un (co)polyester biodégradable flexible tels que :

le module de rigidité du (co)polyester biodégradable rigide est supérieur au module de rigidité du (co)polyester biodégradable flexible, de préférence selon un rapport

module de rigidité du (co)polyester biodégradable rigide / module de rigidité du (co)polyester biodégradable flexible supérieur ou égal à 2, et

l'élongation à la rupture du (co)polyester biodégradable flexible est supérieure à l'élongation à la rupture du (co)polyester biodégradable rigide, de préférence selon un rapport

élongation à la rupture du (co)polyester biodégradable flexible / élongation à la rupture du (co)polyester biodégradable rigide supérieur ou égal à 1,5.

Le concept de taux de cristallinité relatif (en anglais, degree of crystallinity), *Xc,* mesure la proportion de matière se trouvant dans l'état cristallin.

La diffraction de rayon X et l'analyse calorimétrique (« Differential Scanning Calorimetry » en langue anglaise) sont les principales techniques physiques pour mesurer le taux de cristallinité relatif.

Le taux de cristallinité relatif est calculé par analyse calorimétrique (DSC). Il est déterminé par l'intégration de l'enthalpie de fusion et de cristallisation durant le chauffage de la matière, suivant la norme ISO 11357-3, et la normalisation par rapport au matériau 100% cristallin, tel que :

$$Xc = \frac{\Delta H \text{ fusion} - \Delta H \text{ cristallisation}}{\Delta H \text{ fusion matériau } 100\%}$$

Le taux de cristallinité peut être aussi calculé par diffraction de rayon X aux grands angles (WAXD, WAXS). La diffraction du matériau est alors la contribution de sa phase cristalline (raies cristallines) et de la phase amorphe (halo amorphe). La mesure du taux de cristallinité est faite par l'évaluation de l'aire relative de ces deux parties :

$$Xc = \frac{\textit{Aire phase cristalline}}{\textit{Aire phase cristalline} + \textit{Aire phase amorphe}}$$

Dans le cadre du présent texte, l'analyse calorimétrique (DSC) est la méthode préférée pour mesurer le taux de cristallinité.

La température de transition vitreuse est mesurée par analyse thermique différentielle (DSC).

Ainsi la composition selon la présente invention comprend au moins un (co)polyester biodégradable rigide et au moins un (co)polyester biodégradable flexible.

Avantageusement, la différence entre le taux de cristallinité du (co)polyester rigide de taux de cristallinité le plus bas et le taux de cristallinité du (co)polyester flexible de taux de cristallinité le plus haut est supérieure ou égale à 5% de préférence supérieure ou égale à 10%.

De préférence, lorsque la composition selon l'invention comprend un (co)polyester biodégradable rigide et un (co)polyester biodégradable flexible alors la différence entre le taux de cristallinité du (co)polyester rigide et le taux de cristallinité du (co)polyester flexible est supérieure ou égale à 5% de préférence supérieure ou égale à 10%.

La quantité en poids dudit au moins un (co)polyester biodégradable rigide est majoritaire par rapport au poids de l'ensemble des (co)polyesters biodégradables.

Sans vouloir être lié à une quelconque théorie, il apparaît que pour présenter les propriétés décrites ci-dessus à savoir de bonnes propriétés d'aptitude au traitement notamment à l'échelle industrielle tout en conservant des propriétés physiques et mécaniques satisfaisantes, la composition selon l'invention doit présenter une morphologie biphasique dite « mer-iles » dans laquelle le ou les (co)polyester(s) biodégradables flexible(s) forme(nt) la phase minoritaire qui est dispersée dans la phase du/des (co)polyester(s) biodégradable(s) rid ide(s)» qui constitue(nt) la matrice.

L'« aptitude au traitement » est encore appelée « aptitude à la mise en oeuvre » voire la « processabilité » (« processability » en langue anglaise).

La composition selon l'invention est thermiquement stable dans des conditions recommandées d'utilisation ou de mise en oeuvre : elle n'est pas dégradée significativement sous effet thermique lorsqu'elle est soumise à des variations de températures en particulier lors de sa préparation, ou lors de la préparation d'articles à partir de cette composition. En outre des articles obtenus à partir de cette composition ne sont pas dégradés lorsqu'ils sont soumis à des variations de températures notamment comprises entre -10°C et 80°C.

Les inventeurs ont en outre observé que la composition selon l'invention présente des propriétés physiques, mécaniques satisfaisantes notamment en termes de résistance à l'abrasion, force de traction.

La composition selon l'invention est aussi satisfaisante en termes de propriétés rhéologiques et plus particulièrement en termes de morphologie microstructurale, homogénéité, distribution, dispersion, miscibilité et interface des différents constituants *i.e.* les (co)polyesters.

La durée de vie d'un article selon l'invention (application) va de 1 à 10 ans, de préférence de 1 à 5 ans en fonction de l'application, la sollicitation et du milieu d'application qui peut être terrestre, montagnard, marin, lacunaire, tropical, méditerranéen, tempéré.

Avantageusement les articles selon la présente invention sont utilisés en milieu marin : immergés et/ou en bord de mer.

La présente invention permet aussi l'obtention d'une composition apte au contact alimentaire.

(co)polyesters biodégradables

Les (co)polyesters biodégradables utilisés dans la composition selon l'invention sont avantageusement choisis dans le groupe formé par l'acide polylactique, l'acide polyglycolique, les polyhydroxyalcanoates et leurs copolymères ; les polyesters aliphatiques, en particulier le polybutylene succinate, les polyesters aromatiques, semi-aromatiques ainsi que le poly($\varepsilon$-caprolactone) et leurs copolymères en particulier le polybutyrate ou polybutylene adipate terephtalate et leurs copolymères.

Les (co)polyesters biodégradables peuvent être obtenus à partir de monomères biosourcés ou à partir de monomères synthétiques, de préférence à partir de monomères biosourcés.

Comme déjà mentionné, les (co)polyesters biodégradables présentent une haute masse molaire moyenne, avantageusement leur masse molaire moyenne va de $10^4$ à $10^5$ g/mol .

Les poly(acide lactique), poly(acide glycolique et leurs (co)polymères

Plusieurs étapes sont nécessaires pour obtenir le poly(acide lactique) : (1) la fermentation du dextrose pour former l'acide lactique, (2) la polymérisation de l'acide lactique en un oligomère, (3) la dépolymérisation dudit oligomère en lactide et (4) la polymérisation du lactide en poly(acide lactique) .

Tout d'abord, l'acide lactique (monomère cyclique) est produit à partir de ressources renouvelables (maïs, amidon) par fermentation du glucose, plus spécifiquement le D-glucose, également appelé dextrose, extrait de l'amidon contenu dans la biomasse par hydrolyse.

Après avoir isolé le dextrose de l'amidon, celui-ci est soumis à une fermentation généralement au moyen d'une bactérie du genre *Lactobacillus.*

L'acide lactique obtenu à l'issue de la fermentation est ensuite mis en oeuvre dans deux réactions subséquentes : une polycondensation qui conduit à l'obtention d'un oligomère et une polymérisation par ouverture de cycle. Ces deux réactions sont nécessaires à l'élaboration d'acide le poly(acide lactique) de haute masse molaire.

Afin d'obtenir un polymère de masse molaire élevée, l'oligomère est dépolymérisé pour obtenir le lactide. Ensuite, par la présence de catalyseurs, le lactide (substance intermédiaire) est polymérisé de nouveau, mais cette fois par ouverture de cycle afin d'élaborer le poly(acide lactique) encore appelé polylactide. Le polymère ainsi formé par ce type de réaction présente une masse molaire élevée.

Le poly(acide lactique) est avantageusement utilisé dans les compositions selon l'invention.

En outre comme le polylactide est élaboré à partir des deux variantes principales du monomère : L-acide lactique (généralement produit en grande quantité lors du processus de fermentation) et D-acide lactique, trois formes de polylactide existent : le poly(D-lactide) (PDLA), le poly(L-lactide) (PLLA), ainsi que le poly(DL-lactide) (PDLLA), un copolymère issu des deux variantes du monomère.

Afin d'obtenir les propriétés désirées, la majorité du polylactide produit industriellement est constituée d'un mélange de PLLA et de PDLLA. Cependant, la proportion de PLLA est plus élevée puisque ce polymère est obtenu en plus grande quantité.

Le poly(acide glycolique) PGA encore appelé polyglycolide est obtenu de la même manière par polycondensation de l'acide glycolique ou par ouverture de cycle glycolide.

Le poly(acide glycolique) est avantageusement utilisé dans les compositions selon l'invention.

Il est également possible de copolymériser le L-lactide et le DL-lactide avec l'acide glycolique pour synthétiser le poly(lactique-co-glycolique acide) (PLGA). Cette copolymérisation permet notamment d'améliorer les propriétés de biodégradation du PLA.

Les polylactides, polyglycolides et leurs copolymères peuvent être assouplis par l'utilisation d'un agent plastifiant qui va réduire notamment leurs températures de transition vitreuse, leur rigidité, on parle alors de « polylactide plastifié », « polyglycolide plastifié » et « poly(lactique-co-glycolique acide) plastifié ».

Le polylactide, le polyglycolide et le poly(lactique-co-glycolique acide) sont avantageusement utilisés à titre de (co)polyesters biodégradables dans les compositions selon l'invention.

Les polyhydroxyalcanoates (PHA) et leurs copolymères co(PHA)

Les PHAs sont des biopolymères synthétisés par fermentation bactérienne, notamment les bactéries du genre *halobacteriaceae*. C'est suivant les paramètres de synthèse (microorganisme, substrats hydrocarbonés) que vont se former les différents types architectures macromoléculaires des PHAs et les différents (co)polymères de cette famille. Ces architectures macromoléculaires vont conduire à des PHAs aux propriétés différentes.

Plusieurs étapes sont nécessaires à l'élaboration du PHA par fermentation bactérienne. La première étape consiste en la conversion de la source de carbone en acétate. Ensuite, une enzyme, appelée coenzyme A (CoA), s'y fixe par une liaison chimique. Une molécule est alors formée par un processus de condensation, pour créer l'acétoacétyl-CoA, qui sera réduite en un monomère, l'hydroxybutyryl-CoA. Le PHA est finalement formé par polymérisation du monomère qui se fait spontanément. L'intégralité de ce processus se fait à l'intérieur même des bactéries.

La première méthode, industrielle, d'obtention des PHAs passe par 3 étapes : la fermentation bactérienne, l'extraction par solvant (solubilité des PHA dans le chloroforme et pas dans le méthanol) ou par des cocktails d'enzymes ou mécaniquement, et enfin la purification. Il parait important d'indiquer que la méthode par extraction de solvants consomme une quantité importante de solvants non écologiques. Par conséquent, les PHA obtenus par des procédés mettant en oeuvre une extraction par cocktails d'enzymes ou mécaniquement seront de préférence utilisés dans les compositions selon la présente invention.

Les PHAs ainsi obtenus sont habituellement classés suivant le nombre d'atomes de carbone sur leur groupe pendant : en chaîne courte (entre 4 et 5 atomes), chaîne moyenne (6 à 14 atomes) et chaîne longue (plus de 14 atomes).

La seconde méthode consiste en la biosynthèse utilisant des organismes génétiquement modifiés. Cette méthode a comme objectif d'augmenter les rendements ou de diversifier les espèces de bactéries capables de produire des PHA, elle permet aussi d'obtenir des polymères de plus grande masse molaire.

La troisième méthode, la synthèse chimique classique, consiste à synthétiser le PHA par ouverture de cycle. Cette méthode n'utilise pas de bactéries, mais plutôt des lactones utilisées comme monomères. Des catalyseurs à base de zinc, d'aluminium ou d'enzymes sont utilisés. Bien que les PHA synthétisés par cette méthode soient presque identiques à ceux produits par synthèse bactérienne, les coûts de production sont supérieurs.

Les copolymères des PHAs, contiennent d'autres β-hydroxyacides et à d'autres proportions, suivant le conditionnement, l'alimentation des bactéries, par exemple homopolymère PHB : Copolymère PHB-co-PHV. Le caractère rigide ou flexible de ces copolymères peut être contrôlé suivant les types β-hydroxyacides utilisés et leurs proportions.

Les (co)polymères des PHAs sont nommés (co)PHA.

De préférence, les (co)PHA utilisés dans les compositions selon la présente invention sont choisis dans le groupe formé par le poly(3-hydroxypropionate), le poly(3-hydroxybutyrate), le poly(3-hydroxyvalerate), le poly(3-hydroxyhexanoate), le poly(3-hydroxyoctanoate), le poly(3-hydroxynonanoate), le poly(3-hydroxydecanoate), le poly(3-hydroxyundecanoate), le poly(3-hydroxydodecanoate), le poly(3-hydroxyoctadecanoate), le poly(4-hydroxybutyrate), le poly(5-hydroxybutyrate), le poly(5-hydroxyvalerate), et leurs copolymère tel que le poly (hydroxybutyrate-co-hydroxyvalerate) P(3HB-co-3HV) encore appelé PHBV, le poly (3-hydroxybutyrate-co-3-hydroxyhexanoate) P(3HB-co-3HHx)) encore appelé PHBH, poly(3-hydroxybutyrate-co-3-hydroxyoctanoate) P(3HB-co-3HO), poly(3-hydroxybutyrate-co-4 hydroxybutyrate) P(3HB-co-4HB) .

Avantageusement, les (co)polymères des PHAs utilisés dans les compositions selon l'invention sont choisis parmi le poly(3-hydroxybutyrate) ou PHB, le Poly(3-hydroxyvalerate) ou PHV, Poly(3-hydroxyoctanoate), le poly (hydroxybutyrate-co-hydroxyvalerate) ou PHBV, poly (3-hydroxybutyrate-co-3-hydroxyhexanoate) ou P(3HB-co-3HHx)) encore appelé PHBH, poly(3-hydroxybutyrate-co-3-hydroxyoctanoate) ou P(3HB-co-3HO), poly(3-hydroxybutyrate-co-4 hydroxybutyrate) ou P(3HB-co-4HB).

Les polyesters aliphatiques et leurs copolymères, en particulier le polybutylene succinate, et ses copolymères.

Les (co)polyesters aliphatiques biodégradables utilisés dans la composition selon l'invention sont avantageusement choisis dans le groupe formé par le polyéthylène adipate, le polybutylene succinate (PBS) et leurs copolymères tels que le polybutylène succinate-coadipate (PBSA), le polybutylène succinate-co-lactate (PBSL).

Une première méthode, la plus répandue et la plus simple, pour l'obtention du PBS est la polymérisation directe par polycondensation de transestérification en voie fondue.

Du PBS de masse molaire élevée est obtenu à partir de l'acide succinique et du 1,4-butanediol, en présence d'un catalyseur à base par exemple d'antimoine, d'étain et de titane, tels que le titanate de tétrabutyle et d'isopropyle.

Une deuxième méthode est la polycondensation directe par polycondensation de transestérification par voie solvant, la distillation de l'eau dans les conditions azéotropiques permettant la conservation d'une concentration élevée en réactifs et la formation de polymères de masse molaire relativement élevée.

Une troisième méthode est la polymérisation par polycondensation de transestérification par voie solide, le PBS étant synthétisé en masse à partir du diméthyle succinate et du 1,4-butanediol, et ayant une masse molaire peu élevée.

Une quatrième méthode est la synthèse de PBS par polycondensation qui peut être suivie d'une extension de chaînes, permettant l'obtention de PBS de haute masse molaire.

Une cinquième méthode est la synthèse de PBS biosourcé à partir d'acide succinique biosourcé. Cette synthèse de l'acide succinique biosourcé est différente de la synthèse de l'acide succinique pétro-sourcé issu du naphta car l'acide succinique est issu de la fermentation bactérienne du glucose, sucrose ou cellulose issu de ressources 100% renouvelables de sucre de canne, de tapioca, de blé, de maïs et de biomasse non alimentaire. La réaction n'utilise pas de catalyseur métallique ni de solvant chimique. La deuxième molécule entrant dans la synthèse du PBS biosourcé est le butanediol. Dans cette cinquième méthode, il est possible d'obtenir du butanediol biosourcé soit, à partir de glucose par fermentation directe du glucose en butanediol biosourcé soit par fermentation du glucose en acide succinique biosourcé puis par hydrogénation de cette acide succinique biosourcé en butanediol biosourcé. Cette cinquième méthode permet donc d'obtenir un PBS biosourcé à 50% ou à 100% selon l'origine des éléments les constituant.

Généralement, les copolymères du PBS sont obtenus par incorporation d'autre(s) unité(s) notamment diol(s) et dicarboxylique(s).

Parmi ces autres unités, sont mentionnées des unités diéthylène glycol, propoanediol, acide téréphtalique, acide 2-méthylsuccinique, éthylène succinate, butylène succinate, propylene succinate, butylène fumarate, butylène adipate, lacétate, $\varepsilon$-caprolactone.

Avantageusement, les (co)polyesters aliphatiques utilisés dans les compositions selon l'invention sont choisis parmi le polybutylene succinate (PBS), le poly(butylène succinate adipate) PBSA (obtenu par réaction de condensation de l'éthylène glycol et du butanediol-1,4 (BDO) avec les acides adipique et succinique), le poly(butylene succinate-co lactate) (PBSL) et le Poly(butylene succinate-co- $\varepsilon$-caprolactone) (PBSC).

Les polyesters aromatiques, semi-aromatiques et leurs copolymères, en particulier le polybutylene adipate terephtalate encore appelé polybutyrate (PBAT) et ses copolymères.

Les copolyesters (semi-)aromatiques sont obtenus par polycondensation entre des diols aliphatiques, des diacides et des unités aromatiques du type dicarboxyliques (telles que l'acide furanedicarboxylique, l'éthylène téréphtalate, l'acide 2,5-furan dicarboxylique, le dimethyl terephthalate).

A titre d'exemple, le PBAT est obtenu par la réaction de condensation entre le butanediol-1,4 et un mélange d'acides adipique et téréphtalique.

Les (co)polyesters (semi-)aromatiques utilisés de manière préférée dans la composition selon l'invention sont choisis parmi le polybutyrate ou polybutylene adipate terephtalate (PBAT ), le poly (methylene adipate terephthalate) (PTMAT), et le poly(butylène succinate adipate) terephthalate (PBSAT), de manière préférée le polybutyrate.

Autres biopolyesters utilisables dans les compositions selon l'invention :

- PCL : Le poly($\varepsilon$-caprolactone) synthétisé par polymérisation par ouverture de cycle de l' $\varepsilon$-caprolactone, lactone

issue de l'oxydation de la cyclohexanone. Sa biodégradation *in vivo* étant très lente. Trois types de mécanismes sont décrits dans la littérature : anionique qui donne de faibles masses molaires, cationique et par coordination. Cette dernière est la plus utilisée.

- PTT : le poly(triméthylène téréphtalate) est un polymère basé sur le propanediol-1,3 (PDO), de haute masse molaire, de structure semi-cristalline.

    - PEA: polyethylene adipate formé à partir de polyethylene glycole et d'acide adipique.

Dans les compositions selon la présente invention, les (co)polyesters biodégradables biosourcés sont préférés.

Dans les compositions selon la présente invention, les (co)polyesters biodégradables biosourcés et de masse molaire moyenne allant de $10^4$ à $10^5$ g/mol sont préférés.

De manière avantageuse, un agent allongeur de chaîne est ajouté pour augmenter la masse molaire d'un (co)polyester biodégradable utilisé dans les compositions selon l'invention. Généralement il permet aussi d'augmenter la viscosité de la composition.

Un agent allongeur de chaîne possède deux groupes fonctionnels capables de réagir avec les fonctions acides carboxyliques ou alcool des biopolyesters. De nombreux allongeurs de chaînes sont utilisés dans les polyesters pour augmenter leur masse molaire, tels que les diépoxys et les bisoxazolines qui réagissent préférentiellement avec les fonctions acides carboxyliques, et les diisocyanates, les biscaprolactames et les dianhydrides qui réagissent avec les fonctions alcools. Le composé allongeur de chaîne peut être choisi parmi le groupe consistant en un composé époxy multifonctionnel. Des composés allongeurs de chaîne sont disponibles sous la dénomination commerciale Joncryl® de BASF possédant environ 9 fonctions époxy par mole et ayant une réactivité importante avec les fonctions acides.

De préférence, la composition comprend de 0,1% à 0,5% en poids de composé allongeur de chaîne par rapport au poids total de la composition.

Les (co)polyesters biodégradables peuvent également être modifiés dans leur structure par un processus de greffage solide ou par extrusion réactive ou des dérivées de ces processus, les (co)polyesters biodégradables modifiés par greffage peuvent être incorporés comme élément d'addition de compatibilité ou modificateur de propriétés à ladite composition, de préférence la quantité de (co)polyesters biodégradables modifiés par greffage va de 0,5 à 10% en poids par rapport au poids total de la composition.

Les éléments de greffage peuvent êtres de l'anhydride maléique, du silane de vinyle, du glycidyl méthacrylate, de l'hydroxyethyle d'acrylate, du methyle méthacrylate, du butyle acrylate, de l'acide acrylique (...). Le taux de greffage dans le (co)biopolyester est généralement compris entre 0,5 et 5%.

En fonction des applications visées, notamment pour des utilisations dans ou à proximité de l'eau douce ou salée ou dans un environnement soumis aux intempéries, ledit (co)polyester biodégradable est choisi parmi les (co)polyesters stables dans les conditions habituelles d'utilisation, et ce pour une durée convenue à l'avance.

Enfin des impératifs du type " compatibilité alimentaire " peuvent jouer un rôle crucial dans le choix des composants.

(co)polyester biodégradable rigide

La composition selon la présente invention comprend de 40 à 90 %, de préférence de 50 à 90 %, d'au moins un (co)polyester biodégradable rigide par rapport au poids total de la composition.

Ledit (co)polyester biodégradable rigide est choisi dans le groupe formé par l'acide polylactique, l'acide polyglycolique, les polyhydroxyalcanoates, les polyesters aliphatiques, les polyesters aromatiques, semi-aromatiques et leurs copolymères ainsi que leurs copolymères avec la poly($\varepsilon$-caprolactone).

Plus particulièrement, le (co)polyester biodégradable rigide est choisi dans les listes mentionnées ci-dessus.

De façon avantageuse, le (co)polyester biodégradable rigide est choisi dans le groupe formé par le polylactide nommé PLA, le polyglycolide nommé PGA et le poly(lactique-co-glycolique acide) nommé PLAGA,le poly(3-hydroxybutyrate) nommé P(3HB), le poly(3-hydroxyvalerate) nommé P(3HV), le poly(3-hydroxyhexanoate), le poly(3-hydroxyoctanoate), le poly(3-hydroxynonanoate), le poly(3-hydroxydecanoate), le poly(3-hydroxyundecanoate), le poly(3-hydroxydodecanoate), le poly(3-hydroxyoctadecanoate), le poly(5-hydroxybutyrate), le poly(5-hydroxyvalerate), et leurs copolymère tel que le poly (hydroxybutyrate-co-hydroxyvalerate) nommé PHBV, le poly (3-hydroxybutyrate-co-3-hydroxyhexanoate ou P(3HB-co-3HHx)) encore appelé P(3HB-3HH), le polybutylene succinate nommé PBS le poly(triméthylène téréphtalate) nommé PTT , le poly (methylene adipate terephthalate) (PTMAT) et leurs copolymères.

De façon préférée, le (co)polyester biodégradable rigide est choisi dans le groupe formé par le polylactide nommé PLA, le polyglycolide nommé PGA, le poly(lactique-co-glycolique acide) nommé PLAGA, le poly(3-hydroxybutyrate) nommé P(3HB), ), le poly(3-hydroxyvalérate , le poly (hydroxybutyrate-co-hydroxyvalerate) nommé PHBV, le poly (3-hydroxybutyrate-co-3-hydroxyhexanoate ou P(3HB-co-3HHx)) encore appelé P(3HB-3HH) , le polybutylene succinate nommé PBS, le poly(triméthylène téréphtalate) nommé PTT, le poly (methylene adipate terephthalate) (PTMAT).

De manière préférée, un agent allongeur de chaîne est ajouté pour augmenter la masse molaire du (co)polyester biodégradable rigide utilisé dans les compositions selon l'invention.

Avantageusement la masse molaire moyenne du (co)polyester biodégradable rigide va de $10^4$ à $10^5$ g/mol.

(co)polyester(s) biodégradable flexible

La composition selon la présente invention comprend de 10 à 49 %, en poids d'au moins un (co)polyester biodégradable flexible par rapport au poids total de la composition.

Ledit (co)polyester biodégradable flexible est choisi dans le groupe formé, le polylactide plastifié, le polyglycolide plastifié et le poly(lactique-co-glycolique acide) plastifié, les polyhydroxyalcanoates, les polyesters aliphatiques, les polyesters aromatiques, semi-aromatiques, le poly($\varepsilon$-caprolactone) et leurs copolymères.

Par polymère « plastifié », on entend un polymère comprenant de 5 à 15% en poids d'un agent plastifiant par rapport au poids total de la composition constituée du polymère et du plastifiant.

De préférence, le plastifiant est choisi parmi les composés suivants : la triacétine, le glucose, l'urée, la diéthanolamine, les sébacates et dérivés, les adipates et dérivés, les glycols et dérivés, le polysuccinate, le polyadipate et le polysébacate d'éthylène glycol, les huiles époxydées.

Plus particulièrement, le (co)polyester biodégradable flexible est choisi dans les listes mentionnées ci-dessus.

Da façon avantageuse, le (co)polyester biodégradable flexible est choisi dans le groupe formé par le polylactide plastifié, le polyglycolide plastifié et le poly(lactique-co-glycolique acide) plastifié, les polyhydroxyalcanoates de chaîne latérale de longueur moyenne c'est-à-dire allant de 3 à 13 atomes de carbone, le poly(3-hydroxypropionate) ou P(3HP), le poly(4-hydroxybutyrate) ou P(4HB), , le poly(5-hydroxyvalerate) plastifié, le poly (3-hydroxybutyrate-co-3-hydroxyhexanoate) ou P(3HB-co-3HHx)) encore appelé P(3HB-3HH), le poly(3-hydroxybutyrate-co-3-hydroxyoctanoate) ou P(3HB-co-3HO), le poly (3-hydroxybutyrate-co-4-hydroxybutyrate) encore appelé P3HB4HB, le polybutylene succinate et ses copolymère tels que le poly(butylène succinate adipate) nommé PBSA, le poly(butylene succinate-co lactate) nommé PBSL, le polybutylène adipate-co-téréphthalate, le poly(butylene succinate-co- $\varepsilon$-caprolactone) nommé PBSC, le polybutylene adipate terephtalate ou polybutyrate nommé PBAT, le poly (methylene adipate terephthalate) nommé PTMAT, le poly(butylène succinate adipate) terephthalate nommé PBSAT, le polyethylene adipate, (PEA), ainsi que le poly($\varepsilon$-caprolactone).

De façon préférée, le (co)polyester biodégradable flexible est choisi dans le groupe formé par le polylactide plastifié, le polyglycolide plastifié et le poly(lactique-co-glycolique acide) plastifié, le poly(3-hydroxypropionate) ou P(3HP), le poly(4-hydroxybutyrate) ou P(4HB), le poly (3-hydroxybutyrate-co-3-hydroxyhexanoate) ou P(3HB-co-3HHx)) encore appelé P(3HB-3HH), le poly(3-hydroxybutyrate-co-3-hydroxyoctanoate) ou P(3HB-co-3HO), le poly (3-hydroxybutyrate-co-4-hydroxybutyrate) encore appelé P3HB4HB, les polyhydroxyalcanoates de chaîne latérale de longueur moyenne c'est-à-dire allant de 3 à 13 atomes de carbone, le polybutylene succinate et ses copolymère tels que le poly(butylène succinate adipate) nommé PBSA, le poly(butylene succinate-co lactate) nommé PBSL, le polybutylène adipate-co-téréphthalate, le poly(butylene succinate-co- $\varepsilon$-caprolactone) nommé PBSC, le polybutylene adipate terephtalate ou polybutyrate nommé PBAT , le poly (methylene adipate terephthalate) nommé PTMAT, le poly(butylène succinate adipate) terephthalate nommé PBSAT, le polyethylene adipate, (PEA), ainsi que le poly($\varepsilon$-caprolactone).

De manière préférée, un agent allongeur de chaîne est ajouté pour augmenter la masse molaire du (co)polyester biodégradable flexible utilisé dans les compositions selon l'invention.

Avantageusement la masse molaire du/des (co)polyester(s) biodégradable(s) flexible(s) va de $10^4$ à $10^5$ g/mol.

Certains (co)polyesters biodégradables peuvent être considérés comme flexibles ou rigides en fonction de leur composition ou des (co)polyesters avec lesquels ils sont utilisés.

Le premier groupe de (co)polyesters correspondant à cette définition sont les copolyesters dont le module de rigidité et/ou l'élongation à la rupture vont varier en fonction de la proportion des monomères présents.

A titre d'exemple le poly (3-hydroxybutyrate-co-3-hydroxyhexanoate ou PHBH est classé parmi les (co)polyesters biodégradables rigides lorsque le rapport 3-hydroxybutyrate /3-hydroxyhexanoate > 9 ; alors qu'il est classé parmi les (co)polyesters biodégradables flexibles lorsque le rapport 3-hydroxybutyrate /3-hydroxyhexanoate < 9.

Le deuxième groupe de (co)polyesters correspondant à cette définition de copolyesters_sont les copolyesters présentant un module de rigidité compris entre 500 et 850 MPa et une élongation à la rupture comprise entre 100 et 300 %.

A titre d'exemple on peut citer le polybutylène succinate ou PBS.

Lorsqu'une composition selon l'invention comprend un copolyester biodégradable présentant un module de rigidité compris entre 500 et 850 MPa et une élongation à la rupture comprise entre 100 et 300 %, alors elle contient aussi soit au moins un copolyester présentant un module de rigidité supérieur à 850 MPa et une élongation à la rupture inférieure à 100 % soit au moins un copolyester présentant un module de rigidité inférieur à 500 MPa et une élongation à la rupture supérieure à 300 %.

Selon une première variante, la composition comprend un (co)polyester présentant un module de rigidité compris entre 500 et 850 MPa et une élongation à la rupture comprise entre 100 et 300 % et un (co)polyester rigide présentant un module de rigidité supérieur à 850 MPa, et une élongation à la rupture inférieure à 100 %.

Selon une deuxième variante, la composition comprend un (co)polyester présentant un module de rigidité compris entre 500 et 850 MPa et une élongation à la rupture comprise entre 100 et 300 % et un (co)polyester flexible présentant un module de rigidité inférieur à 500 MPa, et une élongation à la rupture supérieure à 300 %.

De préférence la composition selon l'invention est telle que le (co)polyester biodégradable rigide est le polybutylène succinate et le (co)polyester biodégradable flexible est choisi dans le groupe constitué par le poly(butylène succinate adipate) terephthalate, le polybutyrate ou polybutylène adipate téréphtalate, le poly(butylène succinate adipate), le poly(3-hydroxybutyrate-co-3-hydroxyoctanoate ), le poly (3-hydroxybutyrate-co-4-hydroxybutyrate), les polyhydroxyalcanoates de chaîne latérale de longueur moyenne c'est-à-dire allant de 3 à 13 atomes de carbone, le poly(3-hydroxypropionate), le poly(4-hydroxybutyrate) ; ou le (co)polyester biodégradable rigide est le polylactide et le (co)polyester biodégradable flexible est choisi dans le groupe constitué par le polybutylène succinate , le poly(butylène succinate adipate) terephthalate, le polybutyrate, le poly(butylène succinate adipate), le poly(3-hydroxybutyrate-co-3-hydroxyoctanoate ), le poly (3-hydroxybutyrate-co-4-hydroxybutyrate), les polyhydroxyalcanoates de chaîne latérale de longueur moyenne c'est-à-dire allant de 3 à 13 atomes de carbone, le poly(3-hydroxypropionate), le poly(4-hydroxybutyrate) ; ou le (co)polyester biodégradable rigide est choisi dans le groupe constitué par le poly(3-hydroxybutyrate), le poly(3-hydroxyvalérate), le poly (hydroxybutyrate-co-hydroxyvalerate) et le poly (3-hydroxybutyrate-co-3-hydroxyhexanoate) et le (co)polyester biodégradable flexible est choisi dans le groupe constitué par le polybutylène succinate , le poly(butylène succinate adipate) terephthalate, le polybutyrate, le poly(butylène succinate adipate), le poly(3-hydroxybutyrate-co-3-hydroxyoctanoate ), le poly (3-hydroxybutyrate-co-4-hydroxybutyrate), les polyhydroxyalcanoates de chaîne latérale de longueur moyenne c'est-à-dire allant de 3 à 13 atomes de carbone, le poly(3-hydroxypropionate), le poly(4-hydroxybutyrate).

Selon un premier mode préféré, la composition selon l'invention est telle que le (co)polyester biodégradable rigide est le polybutylène succinate (PBS) et le (co)polyester biodégradable flexible est le polybutyrate ou polybutylène adipate téréphtalate (PBAT). Avantageusement, ladite composition comprend de 60 à 80 %, de manière préférée de 65 à 75 % et avantageusement environ 70% en poids de (co)polyester biodégradable rigide par rapport au poids total de la composition et de 20 à 40 %, de manière préférée de 25 à 35 % et avantageusement d'environ 30% de (co)polyester biodégradable flexible en poids par rapport au poids total de la composition.

Selon un deuxième mode préféré, la composition selon l'invention est telle que le (co)polyester biodégradable rigide est le polylactide et le (co)polyester biodégradable flexible est le polybutylène succinate. Avantageusement, ladite composition comprend de 69 à 88 % et avantageusement environ 88 % en poids de (co)polyester biodégradable rigide par rapport au poids total de la composition et de 10 à 30 %, et avantageusement environ 10% de (co)polyester biodégradable flexible en poids par rapport au poids total de la composition.

## Polymère de vinyle

La composition selon la présente invention comprend de 0,5 à 10 %, de préférence de 1 à 5 %, et de manière préférée de 1 à 3 % en poids d'un polymère de vinyle par rapport au poids total de la composition.

La composition selon l'invention comprend avantageusement 1, 2, 3, 4 ou 5% en poids d'un polymère de vinyle. Ce polymère de vinyle peut en outre être greffé.

Avantageusement, ledit polymère de vinyle est choisi parmi le polyacétate de vinyle, le polyacétate de vinyle greffé, le polyacétate de vinyle d'éthylène (copolymères éthylène-acétate de vinyle) nommé PVAc et le polyacétate de vinyle d'éthylène greffé, préférentiellement ledit polymère de vinyle est le polyacétate de vinyle.

Par « polymère de vinyle greffé » on entend que le polymère de vinyle est modifié par greffage, de préférence avec au moins un agent choisi dans le groupe constitué par l'anhydride maléique, le méthacrylate de glycidyle, l'acrylate d'hydroxyéthyle, le méthacrylate de méthyle, l'acrylate de butyle, l'acide acrylique, de préférence l'anhydride maléique et le méthacrylate de glycidyle.

Avantageusement la composition selon l'invention est biodégradable.

Selon une variante préférée, la composition selon l'invention comprend de 67 à 73 % en poids de PBS, 27 à 33 % en poids de PBAT et 1, 2 ou 3 % en poids de polyacétate de vinyle .

Selon une autre variante préférée, la composition selon l'invention comprend de 69 à 88 % en poids de PLA, 10 à 30 % en poids de PBS et 1, 2 ou 3 % en poids de polyacétate de vinyle d'éthylène greffé.

L'article selon l'invention peut présenter une durée de vie allant de 1 à 10 ans, de préférence de 1 à 5. Bien entendu, la durée de vie sera adaptée en fonction de l'application, la sollicitation et du milieu d'application qui peut être terrestre, montagnard, marin, lacunaire, tropical, méditerranéen, tempéré. La durée de vie est adaptée en fonction du choix des (co)polyesters biodégradables et éventuellement des additifs.

En fonction des applications visées, notamment pour des utilisations dans ou à proximité de l'eau douce ou salée ou dans un environnement soumis aux intempéries, la composition selon l'invention est avantageusement stable à l'eau.

Ainsi, il est important que ladite composition manifeste une relative stabilité à l'eau en fonction des utilisations prévues.

De même, il est important que ladite composition manifeste une relative stabilité aux rayons ultra-violet.

En outre, pour résoudre le problème posé à l'origine de l'invention, les (co)polyesters biodégradables utilisés dans les compositions doivent répondre à des exigences en termes de différence des températures de fusion et d'indice de fluidité à chaud (IFC) (encore appelé Melt flow index (MFI) en langue anglaise), dans la suite l'expression MFI est utilisée.

Ainsi, dans les compositions selon l'invention les (co)polyesters biodégradables sont choisis de façon telle que la différence des températures de fusion entre les deux (co)polyesters biodégradables présentant les températures de fusion les plus éloignées est inférieure à 25°C, de préférence inférieure à 15°C, de manière préférée inférieure à 10°C.

En particulier, lorsque la composition selon l'invention comprend deux (co)polyesters biodégradables, la différence des températures de fusion entre les deux (co)polyesters biodégradables est inférieure à 25°C, de préférence inférieure à 15°C, de manière préférée inférieure à 10°C.

La différence des indices de fluidité à chaud entre les deux (co)polyesters biodégradables présentant les indices de fluidité à chaud (MFI) les plus éloignés est inférieure à 5g/10min, de préférence inférieure à 3g/10min.

En outre, dans les compositions selon l'invention, les (co)polyesters biodégradables sont avantageusement choisis de façon telle que chacun présente un indice de fluidité à chaud (MFI) allant de 1 à 7 g/10min pour l'extrusion-filage monofilament, extrusion-film, extrusion-soufflage, l'extrusion-flaconnage ; ou allant de 20 à 50 g/10min pour l'extrusion-filage multifilament, l'extrusion- filée collée ou « spunbond » en anglais (cette technologie étant spécifique aux non-tissés).

En particulier, lorsque la composition selon l'invention comprend deux (co)polyesters biodégradables, la différence des indices de fluidité à chaud de ces deux (co)polyesters biodégradables est inférieure à 5g/10min, de préférence inférieure à 3g/10min.

**Additifs**

La composition selon la présente invention comprend de 0 à 5 % en poids d'au moins un autre (co)polyester sous forme de poudre ou de granulés.

Les (co)polyesters biodégradables utilisés sous forme de poudre dans la composition selon l'invention sont avantageusement choisis dans le groupe formé par l'acide polylactique, l'acide polyglycolique, les polyhydroxyalcanoates et leurs copolymères ; les polyesters aliphatiques, en particulier le polybutylene succinate, les polyesters aromatiques, semi-aromatiques ainsi que le poly($\varepsilon$-caprolactone) et leurs copolymères en particulier le polybutyrate ou polybutylene adipate terephtalate et leurs copolymères.

La composition selon la présente invention comprend avantageusement au moins un autre polymère, différent des (co)polyesters, choisi parmi les polymères d'addition biosourcés et/ou biodégrables et/ou compostables.

L'autre polymère dit « polymère d'addition » est avantageusement choisi parmi les (agro)polymères de la famille des polysaccharides tels que l'alginate, la chitine, le chitosane, la cellulose, l'amidon éventuellement plastifié ou leurs dérivés, de la famille des protéines tels que la caséine, la gélatine, la cératine, le gluten ou leurs dérivés.

De préférence l'autre polymère est choisi parmi l'alginate, la chitine, la cellulose, l'amidon, la caséine.

La composition peut comprendre de 0% à 20% d'au moins un autre polymère différent des (co)polyesters, en poids par rapport au poids total de la composition.

La composition selon l'invention peut aussi comprendre des pigments, de préférence en une quantité inférieure ou égale à 1% en part de poids.

Les pigments sont choisis parmi les pigments minéraux, pigments organiques, pigments naturels pigments issus de plantes tinctoriales, ils présentent une force colorante, une opacité, une résistance aux vieillissements UV, aux intempéries, aux nuisances industrielles, à la migration acceptable pour les applications souhaitées. De préférence les pigments sont biosourcés.

La composition selon l'invention peut également être colorée en surface au moyen d'un colorant liquide. Avantageusement les articles selon l'invention sont colorés en surface au moyen d'un colorant liquide.

Ledit colorant liquide est alors utilisé en une quantité inférieure ou égale à 2% en poids par rapport au poids total de la composition.

De préférence les colorant liquides sont biosourcés. Ils présentent une force colorante, une opacité, et une résistance aux vieillissements UV, aux intempéries, aux nuisances industrielles, à la migration acceptable pour les applications souhaitées.

La composition selon la présente invention comprend avantageusement au moins un additif choisi dans le groupe formé par un composé allongeur de chaîne, un agent de greffage, un renfort minéral, un renfort végétal, un renfort d'origine animale, un acide gras, un composé retardateur de flamme, un composé anti-ultraviolet, un composé anti-bactérien, un composé anti-oxydant, un composé anti-fongique, un agent améliorateur de propriétés organoleptiques, un agent lubrifiant, un agent dispersant, un plastifiant.

De préférence, la composition selon l'invention comprend au moins un additif choisi dans le groupe formé par les agents anti-bactériens, anti-oxydants, anti-fongiques, un composé anti-ultraviolet, un composé retardateur de flamme.

Avantageusement les additifs choisis ne sont soumis à aucune réglementation spécifique.

Bien entendu, chacun de additifs est introduit dans la composition selon l'invention en une quantité telle qu'il n'en altère pas les propriétés.

De préférence, chacun des additifs est utilisé en une quantité inférieure ou égale à 1% en poids par rapport au poids total de la composition et la teneur totale en additifs dans la composition selon l'invention est inférieure ou égale à 10 %de préférence à 5% en poids par rapport au poids total de la composition.

Ces additifs peuvent également être utilisés en traitement de surface, généralement en une quantité inférieure ou égale à 2% en poids par rapport au poids total de la composition. Ces traitements permettent d'améliorer les propriétés thermiques, mécaniques, antibactériennes, anti-oxydante, anti-fongique, anti-UV, anti-feu, hydrophobique des articles préparés à partir de la composition selon l'invention.

Ces additifs sont choisis en fonction des applications visées et permettent de conférer aux articles préparés à partir de la composition selon l'invention une bonne résistance à la salinité, à l'hydrolyse, à l'exposition aux rayons ultraviolets et dans la moindre mesure aux champignons et bactéries présents dans les milieux dits « agressifs».

Les composés allongeurs de chaîne et les agents de greffage sont déjà définis plus haut.

Les renforts minéraux ou végétaux ont généralement une granulométrie inférieure à 50 $\mu$m, préférentiellement inférieur à 10 $\mu$m, très préférentiellement entre 1 et 0,5 $\mu$m.

Ledit renfort minéral peut être de la poudre de coquilles d'huîtres du genre *Crassostrea*, préférentiellement de la poudre de coquille d'huîtres *Crassostrea gigas*. Ledit renfort minéral peut être aussi de la poudre d'os de sépiide échoué de la classe des cephalopodes gigas. Ledit renfort minéral peut être aussi de la poudre de coquille d'oeuf de galliformes, préférentiellement de *gallus gallus domesticus* tel que la poule. Le renfort minéral peut être aussi une charge minérale géologique, comme par exemple du talc ou wollastonite.

La composition peut comprendre de 0% à 10% dudit renfort minéral additionnel, en poids par rapport au poids total de la composition.

Le renfort végétal peut être de la poudre de fruit et/ou de sa coquille de plante de la famille des Fagaceae tel que le Castanea ou le Quercus, ledit renfort végétal peut être choisi parmi les glands, les châtaignes ou les marrons. Le renfort végétal peut être issu d'arthrospira comme la spiruline ou de microalgues eucaryotes ou procaryotes. Le renfort végétal peut être choisi parmi les fibres naturelles végétales notamment les fibres courtes de bambou, de lin, de chanvre, de jute, de miscanthus, de bois, d'asclépiade ou cellulosiques de longueur inférieure à 50 $\mu$m.

La composition peut comprendre de 0% à 10%, préférentiellement de 0% à 2%, dudit renfort végétal en poids par rapport au poids total de la composition.

Le renfort d'origine animal peut être des fibres issues de byssus de mollusques. La composition peut comprendre de 0% à 10%, préférentiellement de 0% à 2%, desdites fibres issues de byssus de mollusques, en poids par rapport au poids total de la composition. Lesdites fibres issues de byssus de mollusques peuvent être issus de byssus de moules, préférentiellement de byssus de *Mytilus edulis.*

L'acide gras peut être choisi parmi le groupe consistant en les acides gras insaturés ; préférentiellement parmi le groupe des acides gras insaturés polymérisés ; très préférentiellement parmi le groupe consistant en les dimères d'acides gras insaturés, les trimères d'acides gras insaturés, et leurs mélanges. Ces acides gras possèdent des groupes d'acides carboxyliques comme réactifs terminaux. Les acides gras commercialisés sous la dénomination Pripol ™ sont issus de la transformation d'acides gras naturels. Plus la chaîne alkyle latérale est longue et plus l'hydrophobie de surface est importante. Le Pripol 1009F® de Croda peut être choisi pour sa longue chaîne alkyle à 36 atomes de carbone, augmentant l'hydrophobie du biopolyester hydrophile et permettant alors de renforcer davantage la résistance à l'eau et limitant l'hydrolysation de la composition. L'acide gras doit être ajouté à des proportions adéquates pour ne pas affecter les propriétés mécaniques de ladite composition.

La composition peut comprendre 0% à 10%, préférentiellement de 0% à 3% d'un acide gras en poids par rapport au poids total de la composition.

Le composé retardateur de flamme, est de préférence biosourcé, il peut être choisi parmi le groupe consistant en des polymères dérivés du furfural, lui-même dérivé de l'hémicellulose (exemple : xylose). La composition peut comprendre de 0% à 2%, préférentiellement de 0,2% à 1%, dudit composé retardateur de flamme, en poids par rapport au poids total de la composition.

L'agent anti-ultraviolets (UV) peut être choisi parmi le groupe consistant en un azote hétérocyle, disponible sous la dénomination commerciale CYASORB® de Solvay, les benzotriazoles disponibles sous le dénomination Chiguard de Chitec, les dioxydes de titane, les dioxydes de zinc. La composition peut comprendre de 0,1% à 3% dudit agent anti-UV, en poids total de la composition.

L'agent améliorateur de propriétés organoleptiques peut être choisi parmi le groupe consistant en un agent de brillance, un agent de blancheur, respectivement de type carbonate de calcium.

La composition peut comprendre de 0% à 5% préférentiellement de 0% à 1%, dudit agent améliorateur de propriétés organoleptiques, en poids par rapport au poids total de la composition.

L'agent lubrifiant permet une réduction du coefficient de friction des matières sur la surface du fourreau-vis et donc une réduction de la pression dans le système d'extrusion. Durant la phase fondue, l'agent lubrifiant migre à la surface de la matière où il forme une couche lubrifiante. Il permet d'améliorer la qualité du mélange et de réduire les risques de dégradation des bioplastiques. L'IncroMax 100® de Croda pourrait être choisi pour son origine végétale. La composition peut comprendre de 0,2% à 0.3% dudit agent lubrifiant, en poids total de la composition.

L'agent dispersant permet une dispersion des pigments et différents renforts ou autres additifs et donc améliorant la qualité du mélange, son homogénéité et sa procéssabilité. Le BYK-P 4102 de BYK pourrait être choisi. La composition peut comprendre de 0,5% à 2% dudit agent dispersant, en poids total de la composition.

Le plastifiant permet une diminution de la température de transition vitreuse ou du taux de cristallinité du biopolyester ou de ses copolymères et donc de diminuer la rigidité du matériau. La plastifiant est choisi en fonction des biopolyesters utilisés dans le mélange. La composition peut comprendre 1 à 15% dudit plastifiant.

## Procédé de préparation

La composition selon l'invention peut être fabriquée par un procédé mettant en oeuvre une étape choisie dans le groupe formé par l'extrusion-filage, l'extrusion-calandrage, l'extrusion-moussage, extrusion de profilé, extrusion-soufflage, extrusion-filmage, extrusion-filée collée ou toutes dérivées de ces méthodes.

Comme déjà mentionné, le procédé de préparation de la composition selon l'invention comprend une étape d'extrusion-filage par voie fondue au moyen d'une extrudeuse bi-vis.

L'extrudeuse bi-vis présente plusieurs trémies d'alimentation le long de son fourreau et une alternance entre profilés de convoyage, de malaxage et de maintien le long de la bis-vis afin d'obtenir un mélange au maximum homogène en sortie de filière. Parmi les paramètres clés on compte le gradient de température dans le fourreau, généralement choisi entre la température de fusion du polymère de plus haut point de fusion utilisé + 15°C et les températures de thermo-dégradation des matières premières et le débit qui ne doit être ni trop faible (pour éviter un temps de séjour trop long des matières dans le fourreau et par conséquent une thermo-dégradation) ni trop fort (pour éviter un trop fort taux de cisaillement et par conséquent une dégradation thermomécanique ou pour éviter un temps de séjour trop court dans le fourreau qui altèrerait la qualité et l'homogénéité de la composition).

Il relève des compétences de l'homme du métier d'ajuster ces paramètres afin d'optimiser la qualité et l'homogénéité de la composition.

De manière préférée, ladite composition est fabriquée par un procédé comprenant les étapes suivantes :

- disposer d'au moins un (co)polyester biodégradable rigide, d'au moins un (co)polyester biodégradable flexible, et d'au moins un polymère de vinyle,
- dans la trémie principale d'une extrudeuse bi-vis, pré-doser et incorporer les (co)polyesters biodégradables rigide(s) et flexible(s) ainsi que les composés optionnels choisis dans le groupe formé par les polymères d'addition sous formes de granulés, l'agent lubrifiant ou autres agents aidant à la mise en oeuvre sous forme de granulés ;
- dans une trémie postérieure positionnée après la trémie principale sur le long de l'extrudeuse bi-vis, pré-doser et incorporer le polymère de vinyle sous forme de poudre et optionnellement les autres additifs choisis dans le groupe formé par les polymères d'addition sous forme de poudre, les composés retardateur de flamme, les composés anti-ultraviolet, les composés anti-bactériens, les composés anti-fongiques, les agents améliorateurs de propriétés organoleptiques, les agents lubrifiants, les agents dispersants sous forme de poudre;
- éventuellement pré-doser et incorporer les renforts minéraux ou végétaux ou d'origine animale sous forme de poudre micronisée dans une trémie positionnée entre la trémie principale et la trémie « postérieure » sur le long de l'extrudeuse bivis ;
- éventuellement pré-doser et incorporer les agents sous forme liquide choisis dans le groupe formé par les acides gras, les composés anti-ultraviolet, les composés anti-bactérien, les composés anti-fongique, les agents améliorateur de propriétés organoleptiques, les agents lubrifiants dans une trémie adaptée aux liquides,
- récupérer le composition selon la présente invention.

Bien entendu, les composants sont pré-dosés de manière à obtenir une composition comprenant des quantités en (co)polyesters biodégradables rigide(s) et flexible(s) et polymère de vinyle conformes à la présente invention.

La composition selon l'invention présente une bonne filabilité, et permet l'obtention d'articles qui présentent une solidité remarquable.

Le critère de filabilité est défini par rapport aux temps de bobinage d'un monofilament dans un processus de mise-en-oeuvre par extrusion filage de laboratoire jusqu'à ce qu'il casse, ce critère est généralement pondéré par rapport aux résultats d'une composition validée industriellement. En moyenne, 5 à 10 essais sont effectués une fois que les paramètres d'extrusion-filage sont optimisés.

En outre il a été observé que la température de mise en oeuvre (extrusion) de la composition selon l'invention est inférieure à celles des plastiques conventionnels de type PEHD, PET, PP : des réductions des températures de chauffe de 20 à 135°C ont été obtenues. Par conséquent un autre avantage du procédé de préparation de la composition selon l'invention est qu'il permet de diminuer le temps de chauffe de l'extrudeuse.

Par exemple la composition conforme A exemplifiée est mise en oeuvre entre 145 et 170°C, alors que les plastiques conventionnels sont extrudés entre 190 et 280°C.

Ladite composition selon l'invention permet une réduction de la consommation d'énergie de la machine et donc une réduction de son impact environnemental.

**Article**

La composition selon l'invention est avantageusement utilisée pour l'écoconception d'articles.

L'article selon l'invention est obtenu à partir de polymères biodégradables, par conséquent un premier avantage est qu'il peut lui-même être biodégradable et/ou recyclable en fin de vie en particulier dans certaines conditions suivant la qualité de la matière et ainsi s'inscrire dans une démarche d'éco-conception, c'est-à-dire, le choix judicieux de matières biodégradables et recyclables dans certaines conditions, avantageusement biosourcées, la valorisation de coproduits (c'est-à-dire les déchets) locaux, la diminution de la consommation d'énergie durant la mise-en-oeuvre réduisant considérablement l'impact environnemental d'articles à la base de ladite composition par rapport aux articles à base de plastiques pétro-sourcés et nonbiodégradables. La réduction de l'impact environnemental se calcule par l'analyse du cycle de vie (ACV) suivant la norme ISO 14040.

Ainsi, la présente invention vise encore un article, obtenu à partir d'une composition selon la présente invention, choisi dans le groupe formé par les fils, monofilaments, multifilaments, fibres, poils de cosmétique, crins, filets notamment pour engins de pêche et/ou alimentaire, cordages, tresses, tissés, non-tissés, structure-soufflées, films, profilés tubes.

L'article selon la présente invention est avantageusement biodégradable et de manière encore préférée compostable.

En outre, ces propriétés permettent une fabrication facilitée des compositions et articles correspondants, avec des propriétés mécaniques et thermiques acceptables ou améliorées et assurent leur biodégradabilité, leur compostabilité et éventuellement leur recyclabilité.

Les inventeurs estiment la biodégradation d'articles obtenus à partir de ladite composition selon l'invention telle que la composition A à une période allant de 5 à 30 ans suivant le milieu de dégradation et les aléas climatiques Les mécanismes de biodégradation peuvent être biotiques sous l'action de microorganismes (hydrolyse enzymatique, oxydation enzymatique, dégradation par acides organiques...) ou abiotique, suivant le milieu ( hydrolyse acido-basique, oxydation, photodégradation, thermodégradation, réaction acido-basique des substrats...)

Par ailleurs, les articles selon l'invention peuvent dans des conditions bien particulières telles qu'un environnement chaud et humide, de type composts industriels (EN 13432, EN 14995), se dégrader beaucoup plus rapidement, de l'ordre de 90% biodégradés en 6 mois. Ainsi réduire les problématiques d'encombrement des décharges.

Ces articles se distinguent par leurs propriétés physiques remarquables en termes de ténacité, résistance à la rupture, rigidité, résistance thermique, résistance à l'abrasion.

En particulier, la composition selon l'invention est avantageusement utilisée pour l'élaboration d'articles monofilaments et de fibres : le filament obtenu est solide : il ne présente pas de défauts de striction le long de sa section (variation de diamètre dû à un étirage non-uniforme).

De préférence ledit article de type monofilament ou fibre selon l'invention présente un diamètre allant de 0,1 mm à 1 mm.

Ledit monofilament est avantageusement biodégradable et de manière encore préférée compostable. En particulier ledit monofilament est destiné à une application en géotextile notamment pour le secteur de la pêche, la corderie, la cosmétique, les tissés et non tissés pour le textile, le composite, le médical, l'hygiène, le bâtiment, l'alimentaire.

Avantageusement, la composition selon la présente invention est utilisée dans ou pour la fabrication de engins de pêche ou de géotextiles notamment utilisables en milieu marin ou bord de mer en en particulier dans des domaines tels que la conchyliculture ou l'aquaculture.

L'invention vise encore un procédé de préparation d'un article dans lequel une composition selon l'invention est soumise à une étape d'extrusion-filage par voie fondue. Avantageusement l'étape d'extrusion filage de préparation de l'article selon l'invention est effectuée en utilisant une extrudeuse mono-vis. L'extrudeuse mono-vis présente une trémie d'alimentation et une mono-vis de convoyage permettant de fondre et de convoyer la matière jusqu'à la filière de filage.

Parmi les paramètres clés de cette étape, on compte le gradient de température dans le fourreau, généralement choisi entre la température de fusion du polymère de plus haut point de fusion utilisé + 15°C et les températures de thermo-dégradation des matières premières et le débit qui ne doit être ni trop faible (pour éviter un temps de séjour trop long des matières dans le fourreau et par conséquent une thermo-dégradation) ni trop fort. En outre le choix de la filière de sortie d'extrudeuse est également très important puisqu'il va déterminer la forme de la section et partiellement la dimension du filament qui sera étiré.

Il relève des compétences de l'homme du métier d'ajuster ces paramètres afin d'optimiser la qualité de l'article.

De manière préférée, l'article monofilament ou fibre de diamètre de 0,1 mm à 1 mm selon l'invention est fabriqué par un procédé comprenant les étapes suivantes :

- disposer d'une composition selon l'invention sous forme de granulés,
- incorporer ladite composition dans la trémie principale d'une extrudeuse mono-vis horizontale,
- à la sortie de la filière de filage de l'extrudeuse, récupérer la composition fondue de diamètre allant de 0.3 à 4 mm obtenue dans un bac à l'eau de refroidissement variable en température entre 0 et 100°C et en profondeur d'immersion,
- entraîner la composition filée et refroidie par un premier banc de rouleaux en rotation à une première vitesse v1,
- étirer la composition filée une première fois à travers un four ( à air chaud, infra-rouge ou eau chaude..) fixant la température d'étirage $T_F$ *via* un second banc de rouleaux en rotation à une vitesse v2 supérieure à v1,
- éventuellement réitérer l'étape précédente une ou plusieurs fois ;
- récupérer le filament par bobinage.

L'expression «par bobinage » signifie que le filament obtenu est enroulé autour d'une bobine.

Il relève des compétences d'optimiser les vitesses de rotation des rouleaux en particulier v1 et v2, les températures notamment la température d'étirage $T_F$, taux d'étirage en fonction des propriétés mécaniques de l'article souhaitées.

Avantageusement, l'article en particulier le monofilament selon la présente invention est biodégradable, de manière préférée il est aussi compostable.

**Utilisations**

Toute en s'inscrivant dans une démarche éco-responsable, l'article biodégradable selon l'invention présente des propriétés très satisfaisantes en termes de bonne résistance dans des conditions de fortes salinité, taux d'humidité élevé, taux bactériologique élevé, exposition prolongée aux rayons ultraviolets, et/ou variations de températures, notamment à des variations de températures comprises entre -10°C à 80°C.

Ainsi l'article selon l'invention peut être utilisé dans le domaine médical, marin, nautique, cosmétique, textile, géotextile, automobile, aéronautique, mobilier, bâtiment.

L'article selon l'invention présente des avantages en fin de vie. Il peut soit être recyclé si la composition respecte les critères de qualité suivant un protocole d'analyse spécifique, permettant sa remise-en-oeuvre pour la réalisation du même article ou d'autres articles (p.ex : non-tissés, plaques, profilés...), ou soit être composté en compost industriel si la composition ne respecte pas les critères de qualité pour le recyclage et ceux pour le compostage.

Selon les applications, il présente au moins une des propriétés suivantes : aptitude au contact alimentaire, biocompatibilité, approbation médicale, antibactérienne, grade de plastique adapté au processus de mise-en-oeuvre par extrusion spécifique.

Les exemples qui suivent visent à illustrer l'invention sans en limiter la portée.

Exemples

**Exemple I**

**1. Compositions**

Les polymères utilisés dans l'exemple I sont présentés dans les tableaux suivants :
Dans le tableau 1 sont présentées les caractéristiques du PBS commercialisé sous le dénomination FZ91 par la société PTT MCC Biochem Company Ltd.

Le PBS est utilisé à titre de (co)polyester biodégradable rigide.

Tableau 1 : Caractéristiques de FZ91 de PTT MCC Biochem Company Ltd

| Caractéristiques | Unité | FZ91 |
|---|---|---|
| Taux de cristallinité | % | 40 - 60 |

(suite)

| Caractéristiques | Unité | FZ91 |
|---|---|---|
| Température de transition vitreuse | °C | - 33 |
| MFI (190°C - 2,16kg) | g/10min | 5 |
| Densité | g/cm$^3$ | 1,26 |
| Température de fusion | °C | 115 |
| Module d'Young | MPa | 580 |
| Contrainte à la rupture | Mpa | 47 |
| Elongation à la rupture | % | 210 |

Dans le tableau 2 sont présentées les caractéristiques du PBAT commercialisé sous le nom Ecoflex par la société BASF.
Le PBAT est utilisé à titre de (co)polyester biodégradable flexible.

Tableau 2 : Caractéristiques de l'Ecoflex de BASF

| Caractéristiques | Unité | Ecoflex Blend C1200 |
|---|---|---|
| Taux de cristallinité | % | 10 - 12 |
| Température de transition vitreuse | °C | - 35 |
| MFI (190°C - 2,16kg) | g/10min | 2,7 - 4,9 |
| Densité | g/cm$^3$ | 1,25 - 1.27 |
| Température de fusion | °C | 111 |
| Module d'Young | MPa | < 300 |
| Contrainte à la rupture | Mpa | 36 - 45 |
| Elongation à la rupture | % | 560 - 710 |

Dans le tableau 3 sont présentées les caractéristiques du PVAc sous forme de poudre commercialisé sous le nom Vinnex par la société WACKER.

Tableau 3 : Caractéristiques du Vinnex de WACKER

| Caractéristiques | Unité | Vinnex |
|---|---|---|
| MFI | ccm/10 min | 2.1 |
| Densité | g/cm$^3$ | 1,23 |
| Température de fusion | °C | 110 |
| Taille des particules | > 400 μm | Max 4% |
| Masse molaire | kDa | 110 - 150 |

Compositions

Les compositions A (conforme à l'invention) et B (comparative) ont été préparées. Ces compositions comprennent les matières premières et proportions indiquées dans le tableau 4 ci-après. Les matières premières sont exprimées en pourcentage (et part en poids) du composé final.

Tableau 4 : composés et proportions (en % pds par rapport à la composition finale)

| | %PBS | %PBAT | %PVAc | %Biosourcé | %Bio dégradable |
|---|---|---|---|---|---|
| Composition Conforme A | 69 | 29 | 2 | 34.5 | 100 |

(suite)

|  | %PBS | %PBAT | %PVAc | %Biosourcé | %Bio dégradable |
|---|---|---|---|---|---|
| Composition comparative B | 70 | 30 | 0 | 35 | 100 |

Procédé de préparation des compositions

Le mélange s'effectue par un processus d'extrusion bi-vis selon le procédé décrit ci dessus.

La composition est compoundée (mise en œuvre ) par extrusion bi-vis. L'extrudeuse utilisée pour les tests est une mini-extrudeuse bivis de laboratoire. Elle comporte une bi-vis sans fin qui tourne à l'intérieur du fourreau cylindrique régulé en température par des systèmes de chauffe et de refroidissement. La fonction de l'extrudeuse est de convoyer les (co)polyesters biodégradables, polymère de vinyle et les additifs de ladite composition, de les fondre, les mettre en pression et de les mélanger afin d'obtenir un jonc en sortie de filière.

Le jonc est ensuite refroidi, puis granulé afin d'obtenir ladite composition qui sera ensuite mise en oeuvre par injection.

Pour chaque composition, il a été préparé 1 kg de matière. Le réglage des températures des différentes zones de l'extrudeuse a été réalisé en cohérence avec les températures de changement de phases des biopolymères et les températures de dégradation de ladite composition. Le réglage de la vitesse de vis à l'intérieur du fourreau a permis d'assurer le bon mélange de ladite composition par cisaillement sans dégrader de manière importante la matière. Ces paramètres sont consignés dans le tableau 5.Le PBS et le PBAT sous forme de granulés sont pré-dosés et incorporés (ensemble) dans la trémie principale d'extrudeuse bi vis postérieure (trémie 3).

Pour la préparation de la composition A conforme, le PVAc sous forme de poudre est pré-dosé et incorporé dans une trémie tertiaire sur le long de l'extrudeuse bi vis.

Le tableau 5 présente les températures de chaque zone (trémie) et vitesses (débit) de la composition.

Tableau 5 : Paramètres de l'extrudeuse bi-vis de laboratoire

| Réglages extrudeuse bivis de laboratoire (formulation) | | | | |
|---|---|---|---|---|
| Zone | / | 1 | 2 | 3 |
| Température | [°C] | 155 | 165 | 170 |
| Vitesse | [kg/h] | 2 - 5 | | |

Puis la composition A selon l'invention a également été compoundée par extrusion bi-vis au moyen d'une bivis pilote c'est-à-dire à l'échelle industrielle selon les paramètres consignés dans le tableau 6.

Tableau 6 : Paramètres de l'extrudeuse bi-vis pilote

| Réglages extrudeuse bivis pilote (formulation) | | | | | | | | | | | |
|---|---|---|---|---|---|---|---|---|---|---|---|
| Zone | / | 1 | 2 | 3 | 4 | 5 | 6 | 7 | 8 | 9 | 10 |
| Température | [°C] | 145 | 150 | 150 | 155 | 155 | 160 | 160 | 165 | 165 | 170 |
| Vitesse | [kg/h] | 25 - 40 | | | | | | | | | |

Procédé de préparation d'un article monofilament

Un article monofilament a été préparé à partir de chacune des compositions A et B en utilisant extrudeuse mono-vis horizontale selon les paramètres présentés dans le tableau 7.

Tableau 7 : Paramètres de l'extrudeuse bi-vis pilote

| Réglages extrudeuse monovis de laboratoire (filage) | | | | |
|---|---|---|---|---|
| Zone | / | 1 | 2 | 3 |
| Température | [°C] | 155 | 165 | 170 |
| Vitesse | [tr/min] | 5 - 20 | | |

(suite)

| Réglages extrudeuse monovis de laboratoire (filage) | | |
|---|---|---|
| Filière | mm | 0,3 - 4 |
| Bain de refroidissement | [°C] | 60 - 70 |
| Banc de rouleau d'alimentation | m / min | 4 à 28 |
| Banc de rouleau d'étirage | m / min | 10 à 150 |
| Four d'étirage | °C | 70-90°C |

**2. Résultats**

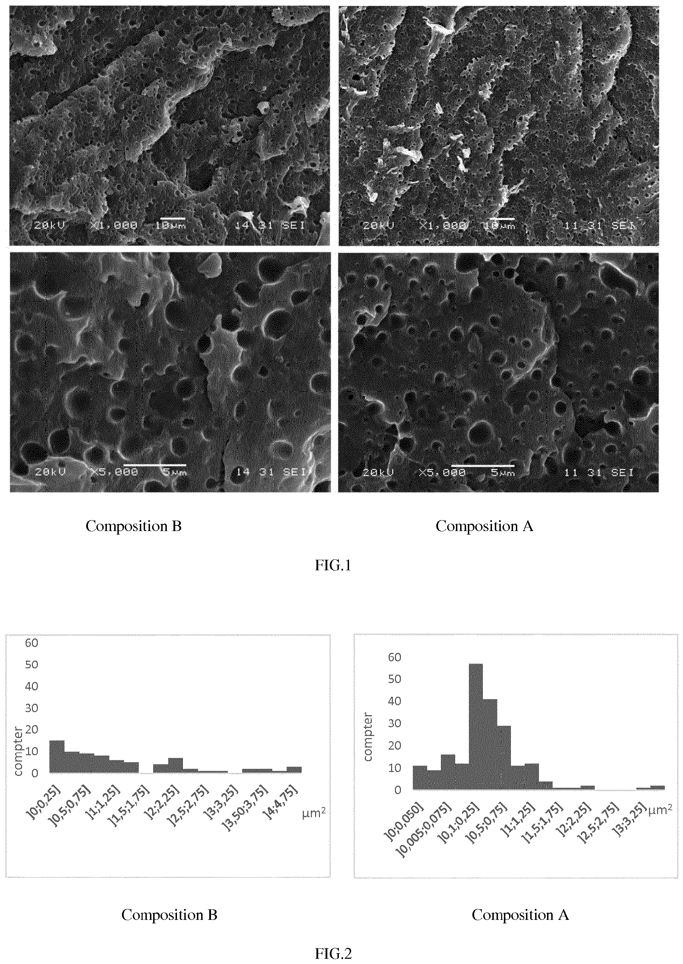

La figure 1 présente des photographies prises au microscope électronique à balayage (MEB), les photographies du haut sont prises au grossissement X1000 et celles du bas au grossissement X5000.

Les 4 photographies présentent des compositions de morphologie biphasique « mer-iles ».

Les photographies de gauche concernent la composition comparative B et celles de droite la composition conforme A. Ces compositions ont subi une gravure chimique avec du THF pour éliminer la phase minoritaire PBAT. Ce traitement est important pour bien dissocier les phases PBS et PBAT.

On observe que la composition A présente une diminution de la taille des domaines, ainsi qu'une diminution de leur distribution de taille et donc du taux de coalescence de la phase PBAT.

De plus, la dispersion des domaines de la phase PBAT dans la phase PBS est plus uniforme dans la composition A que dans la composition B

De ces observations, il résulte que la morphologie microstructurale de la composition A est plus homogène que celle de la composition B.

Tableau 8 : Propriétés mécaniques des compositions A et B

| Propriétés | Normes | Composition B comparative | | Composition A conforme | |
|---|---|---|---|---|---|
| Température de fusion (°C) | ISO 3146 | 106 | | 107 | |
| Température d'étuvage maximum (°C) | / | 60-70°C | | | |
| MFI (170°C, 2.16 kg) (g/10min) | ISO 1133 | 3-4 | | 2-3 | |
| Diamètre monofilament (mm) | Microscope optique | 0.126 | 0.7 | 0.13 | 0.7 |
| Titre (Tex) | ISO 2060 | 16,59 | 492 | 17,18 | 540 |
| Force (cN) | ISO 5079 | 640 | 8850 | 550 | 8700 |
| Allongement (%) | ISO 5079 | 67 | 128 | 54 | 124 |
| Essais d'abrasion | ASTM D6611 | / | 1919 | / | 2144 |
| Filabilité (%) | / | 60 | | 90 - 100 | |

La composition A présente un MFI légèrement plus faible et donc une plus haute viscosité que la composition B. Ces propriétés font que la composition A présente une meilleure aptitude au traitement (« processability ») que la composition B. La composition A est particulièrement, bien adaptée à diverses extrusions, comme par exemple aux processus d'extrusion filage de monofilaments ou l'extrusion soufflage de flacons ou l'extrusion profilage.

La composition A, conforme à l'invention, présente une augmentation significative du critère de filabilité par rapport à la composition comparative B.

Les monofilaments obtenus à partir de la composition A présentent une meilleure résistance à l'abrasion que les monofilaments obtenus à partir de la composition B.

Cette caractéristique est très importante pour des applications de produits monofilament, tresse, cordage.

En outre on n'observe pas de diminution significative des autres propriétés mécaniques.

La figure 2 présente des graphiques de la distribution de taille des domaines PBAT. Le graphique de gauche

21

concerne la composition comparative B et celui de droite la composition conforme A.

La figure 3 est un graphique présentant la force à la traction (propriété mécanique) d'un monofilament obtenu à partir de la composition A en fonction de son diamètre. La courbe foncée correspond au mono-filament mis en oeuvre au laboratoire tandis que la courbe claire correspond au mono-filament mis en oeuvre selon un procédé industriel.

On remarque que les monofilaments mis en oeuvre selon un procédé industriel présentent des forces à la traction très supérieures (ténacité supérieure à 23 cN/Tex).

Dans ces mêmes conditions, l'article obtenu à partir de la composition A selon l'invention présente avantageusement une masse linéique (titre) inférieure à celle des articles obtenus à partir de PP, PEHB ou de PET.

Il ressort de ce graphique que la composition selon l'invention peut être mise en oeuvre de manière industrielle tout en conservant des propriétés mécaniques acceptables voire meilleures.

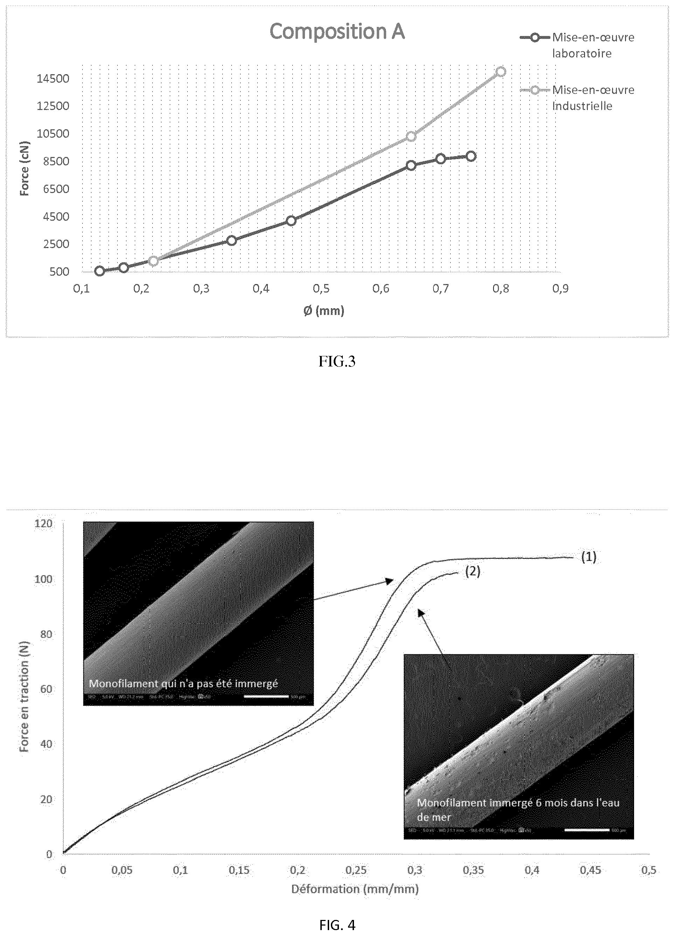

La figure 4 présente des photographies d'un monofilament obtenu à partir de la composition A, prises au microscope électronique à balayage (MEB), les photographies sont prises au grossissement X50 et des courbes d'essais mécaniques de traction associées à ces photographies.

Les photographies permettent une comparaison de l'état de surface entre un monofilament, immergé 6 mois dans l'eau de mer (photographie en bas à droite) qui présente une surface rugueuse et dégradée par rapport à la photographie d'un monofilament qui n'a pas été immergé dans l'eau de mer (en haut à gauche) qui présente une surface lisse et régulière.

Les deux photographies sont associées à des courbes mécaniques de traction relatives au monofilament immergé pendant 6 mois dans l'eau de mer, nommée courbe (2) et au monofilament non immergé, nommée courbe (1). A cause de sa biodégradation dans l'eau de mer, le monofilament immergé pendant 6 mois présente une résistance et un allongement à la rupture plus faible. De manière surprenante, le monofilament qui a été immergé dans l'eau de mer, présente une biodégradation de surface importante mais cependant une très faible perte de sa résistance mécanique avec une différence de 5N par rapport au monofilament qui n'a pas été immergé. Ainsi le monofilament peut commencer à se biodégrader de manière significative tout en conservant des propriétés mécaniques satisfaisantes à l'application.

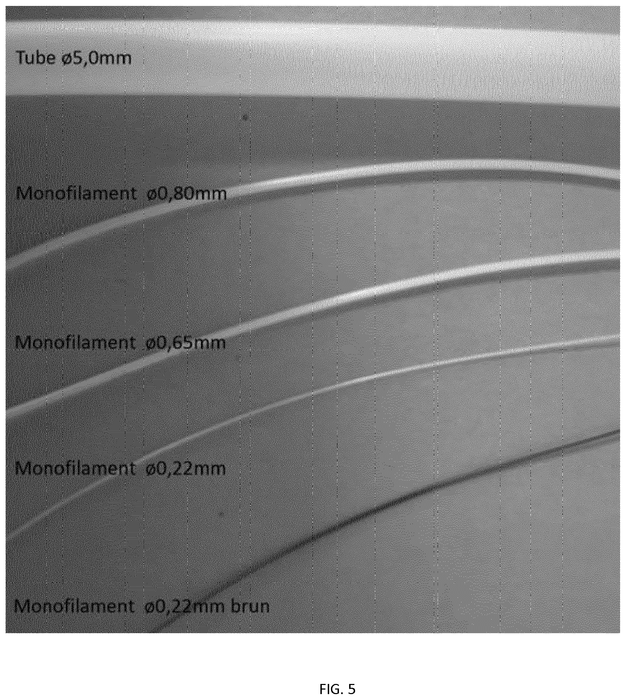

La figure 5 présente une photographie d'exemples d'articles obtenus à partir d'une composition A selon la présente invention. De haut en bas, la photographie présente un tube blanc de diamètre 5,0 mm ; un monofilament blanc de diamètre 0,80 mm ; un monofilament blanc de diamètre 0,65 mm ; un monofilament blanc de diamètre 0,22 mm ; un monofilament brun de diamètre 0,22 mm.

## Exemple II

Les polymères utilisés dans l'exemple II sont présentés dans les tableaux suivants

Dans le tableau 9 sont présentées les caractéristiques du polylactide (PLA) commercialisé sous la dénomination Ingeo 6362D par la société Natureworks

Le PLA est utilisé à titre de (co)polyester biodégradable rigide.

Tableau 9 : Caractéristiques de Ingeo 6362D par la société Natureworks

| Caractéristiques | Unité | Ingeo 6362D |
|---|---|---|
| Taux de cristallinité | % | < 15 |
| Température de transition vitreuse | °C | 60 |
| MFI (190°C - 2,16kg) | g/10min | 20 |
| Densité | g/cm$^3$ | 1,24 |
| Température de fusion | °C | 125 |
| Module d'Young | MPa | > 1000 |
| Elongation à la rupture | % | < 100 |

Dans le tableau 10 sont présentées les caractéristiques du PBS commercialisé sous le dénomination FZ71 par la société PTT MCC Biochem Company Ltd.

Le PBS est utilisé à titre de (co)polyester biodégradable flexible.

Tableau 10 : Caractéristiques de FZ71 de PTT MCC Biochem Company Ltd

| Caractéristiques | Unité | FZ71 |
|---|---|---|
| Température de transition vitreuse | °C | - 33 |

(suite)

| Caractéristiques | Unité | FZ71 |
|---|---|---|
| MFI (190°C - 2,16kg) | g/10min | 22 |
| Densité | g/cm3 | 1,26 |
| Température de fusion | °C | 115 |
| Module d'Young | MPa | 580 |
| Elongation à la rupture | % | 200 |

Dans le tableau 11 sont présentées les caractéristiques du PVAc greffé avec de l'anhydride maléique, sous forme de poudre commercialisé sous le nom SCONA TPEV 1112 PB par la société BYK-Chemie GmbH.

Tableau 11 : Caractéristiques du SCONA TPEV 1112 PB de BYK-Chemie GmbH

| Caractéristiques | Unité | SCONA TPEV 1112 PB |
|---|---|---|
| Teneur en anhydride maléique | % | > 2 |
| MFI (190°C - 21,6kg) | g/10min | 20-50 |

Les compositions C (conforme à l'invention) et D (comparative) ont été préparées. Ces compositions comprennent les matières premières et proportions indiquées dans le tableau 12 ci-après. Les matières premières sont exprimées en pourcentage (et part en poids) du composé final.

Tableau 12: composés et proportions (en % pds par rapport à la composition finale)

| | %PLA | %PBS | %PVA greffé | %Biosourcé | %Bio dégradable |
|---|---|---|---|---|---|
| Composition Conforme C | 88 | 10 | 2 | >90 | 100 |
| Composition comparative D | 90 | 10 | 0 | >90 | 100 |

Les composition C et D selon l'invention ont été compoundées par extusion bi-vis au moyen d'une bivis pilote, c'est-à-dire à l'échelle industrielle selon les paramètres consignés dans le tableau 6.

**Résultats**

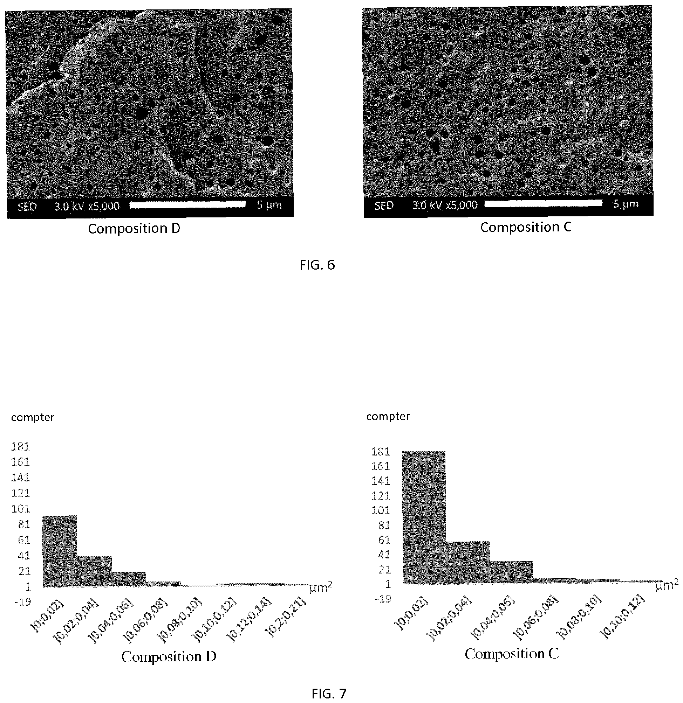

La figure 6 présente des photographies prises au microscope électronique à balayage (MEB), les photographies sont prises au grossissement X5000.

Les photographies présentent des compositions de morphologie biphasique « mer-iles ».

La photographie de gauche concerne la composition comparative D et celle de droite la composition conforme C. Ces compositions ont subi une gravure chimique pour éliminer la phase minoritaire de PBS. Ce traitement est important pour bien dissocier les phases PLA et PBS.

On observe que la composition C présente une diminution de la taille des domaines, ainsi qu'une diminution de leur distribution de taille et donc du taux de coalescence de la phase PBS.

De plus, la dispersion des domaines de la phase PBS dans la phase PLA est plus uniforme dans la composition C que dans la composition D.

De ces observations, il résulte que la morphologie microstructurale de la composition C est plus homogène que celle de la composition D.

La figure 7 présente des graphiques de la distribution de tailles des domaines de PBS, le graphique de gauche concerne la composition comparative D et celle de droite la composition conforme C.

**Revendications**

1. Composition comprenant :

   - de 40 à 90 %, de préférence de 50 à 90%, en poids d'au moins un (co)polyester biodégradable rigide par rapport au poids total de la composition,
- de 10 à 49 % en poids d'au moins un (co)polyester biodégradable flexible par rapport au poids total de la composition,
- de 0,5 à 10 % en poids d'un polymère de vinyle par rapport au poids total de la composition, ladite composition étant **caractérisée en ce que**
- la différence des températures de fusion entre les deux (co)polyesters biodégradables présentant des températures de fusion les plus éloignées est inférieure à 25°C, de préférence inférieure à 15°C, de manière préférée inférieure à 10°C, les températures de fusion étant déterminées selon la norme ISO 3146,
- la différence des indices de fluidité à chaud entre les deux (co)polyesters biodégradables présentant les indices de fluidité à chaud les plus éloignés est inférieure à 5g/10min, de préférence inférieure à 3g/10min, les indices de fluidité à chaud étant déterminés selon la norme ISO 1133,
un (co)polyester rigide étant un polymère présentant un module de rigidité supérieur à 500 MPa, de préférence supérieur à 600 MPa et une élongation à la rupture inférieure à 300 %, de préférence inférieure à 250 %,
un (co)polyester flexible étant un polymère présentant un module de rigidité inférieur à 850 MPa, de préférence inférieur à 700 MPa et une élongation à la rupture supérieure à 100 %, de préférence supérieur à 200 %,
les modules de rigidité et les élongation à la rupture étant déterminés selon la norme NF EN ISO 527-1,
lorsque la composition comprend un (co)polyester biodégradable présentant un module de rigidité compris entre 500 et 850 MPa et une élongation à la rupture comprise entre 100 et 300 %, alors elle contient aussi soit au moins un (co)polyester présentant un module de rigidité supérieur à 850 MPa et une élongation à la rupture inférieure à 100 % soit au moins un (co)polyester présentant un module de rigidité inférieur à 500 MPa et une élongation à la rupture supérieure à 300 %.

2. Composition selon la revendication 1 **caractérisée en ce que** le (co)polyester biodégradable rigide est choisi dans le groupe formé par le polylactide, le polyglycolide, le poly(lactique-co-glycolique acide), le poly(3-hydroxybutyrate), le poly(3-hydroxyvalérate), le poly (hydroxybutyrate-co-hydroxyvalerate), le poly (3-hydroxybutyrate-co-3-hydroxyhexanoate), le polybutylene succinate, le poly(triméthylène téréphtalate), le poly (methylene adipate terephthalate).

3. Composition selon l'une quelconque des revendications 1 ou 2 **caractérisée en ce que** le (co)polyester biodégradable flexible est choisi dans le groupe formé par le polylactide plastifié, le polyglycolide plastifié, le poly(lactique-co-glycolique acide) plastifié, le poly(3-hydroxypropionate), le poly(4-hydroxybutyrate), le poly (3-hydroxybutyrate-co-3-hydroxyhexanoate), le poly(3-hydroxybutyrate-co-3-hydroxyoctanoate), le poly (3-hydroxybutyrate-co-4-hydroxybutyrate), les polyhydroxyalcanoates de chaîne latérale de longueur moyenne c'est-à-dire allant de 3 à 13 atomes de carbone, le polybutylene succinate et ses copolymère tels que le poly(butylène succinate adipate, le poly(butylene succinate-co lactate), le polybutylène adipate-co-téréphthalate, le poly(butylene succinate-co- ε-caprolactone), le polybutylene adipate terephtalate ou polybutyrate, le poly (methylene adipate terephthalate), le poly(butylène succinate adipate) terephthalate, le polyethylene adipate ainsi que le poly(ε-caprolactone).

4. Composition selon l'une quelconque des revendications précédentes **caractérisée en ce que** le (co)polyester biodégradable rigide est le polybutylène succinate et le (co)polyester biodégradable flexible est choisi dans le groupe constitué par le poly(butylène succinate adipate) terephthalate, le polybutyrate ou polybutylène adipate téréphtalate, le poly(butylène succinate adipate), le poly(3-hydroxybutyrate-co-3-hydroxyoctanoate ), le poly (3-hydroxybutyrate-co-4-hydroxybutyrate), les polyhydroxyalcanoates de chaîne latérale de longueur moyenne c'est-à-dire allant de 3 à 13 atomes de carbone, le poly(3-hydroxypropionate), le poly(4-hydroxybutyrate) ; ou

le (co)polyester biodégradable rigide est le polylactide et le (co)polyester biodégradable flexible est choisi dans le groupe constitué par le polybutylène succinate, le poly(butylène succinate adipate) terephthalate, le polybutyrate, le poly(butylène succinate adipate), le poly(3-hydroxybutyrate-co-3-hydroxyoctanoate ), le poly (3-hydroxybutyrate-co-4-hydroxybutyrate), les polyhydroxyalcanoates de chaîne latérale de longueur moyenne c'est-à-dire allant de 3 à 13 atomes de carbone, le poly(3-hydroxypropionate), le poly(4-hydroxybutyrate) ou le (co)polyester biodégradable rigide est choisi dans le groupe constitué par le poly(3-hydroxybutyrate), le poly(3-hydroxyvalérate), le poly (hydroxybutyrate-co-hydroxyvalerate) et le poly (3-hydroxybutyrate-co-3-hydroxyhexanoate) et le (co)polyester biodégradable flexible est choisi dans le groupe constitué par le polybutylène succinate , le poly(butylène succinate adipate) terephthalate, le polybutyrate, le poly(butylène succinate adipate), le poly(3-hydroxybutyrate-co-3-hydroxyoctanoate ), le poly (3-hydroxybutyrate-co-4-hydroxybutyrate), les polyhydroxyalcanoates de chaîne latérale de longueur moyenne c'est-à-dire allant de 3 à 13 atomes de carbone, le poly(3-hydroxypropionate), le poly(4-hydroxybutyrate).

**5.** Composition selon l'une quelconque des revendications 1 à 4 **caractérisée en ce que** le (co)polyester biodégradable rigide est le polybutylène succinate et le (co)polyester biodégradable flexible est le polybutyrate ou polybutylène adipate téréphtalate.

**6.** Composition selon la revendication précédente **caractérisée en ce qu'**elle comprend de 60 à 80 %, de manière préférée de 65 à 75 % et avantageusement environ 70% en poids de (co)polyester biodégradable rigide par rapport au poids total de la composition et de 20 à 40 %, de manière préférée de 25 à 35 % et avantageusement d'environ 30% de (co)polyester biodégradable flexible en poids par rapport au poids total de la composition.

**7.** Composition selon l'une quelconque des revendications 1 à 4 **caractérisée en ce que** le (co)polyester biodégradable rigide est le polylactide et le (co)polyester biodégradable flexible est le polybutylène succinate.

**8.** Composition selon la revendication précédente **caractérisée en ce qu'**elle comprend de 69 à 88 % et avantageusement environ 88 % en poids de (co)polyester biodégradable rigide par rapport au poids total de la composition et de 10 à 30 %, et avantageusement environ 10% de (co)polyester biodégradable flexible en poids par rapport au poids total de la composition.

**9.** Composition selon l'une quelconque des revendications 1 à 8 **caractérisée en ce que** le polymère de vinyle est choisi parmi le polyacétate de vinyle, le polyacétate de vinyle greffé, le polyacétate de vinyle et le polyacétate de vinyle d'éthylène greffé, de préférence le polyacétate de vinyle.

**10.** Composition selon l'une quelconque des revendications 1 à 9 **caractérisée en ce que** la quantité de polymère de vinyle va de 1 à 5 %, de préférence de 1 à 3 % en poids par rapport au poids total de la composition.

**11.** Composition selon l'une quelconque des revendications 1 à 10 **caractérisée en ce qu'**elle contient au moins un additif choisi dans le groupe formé par un composé allongeur de chaîne, un agent de greffage, un renfort minéral, un renfort végétal, un renfort d'origine animale, un acide gras, un composé retardateur de flamme, un composé anti-ultraviolet, un composé anti-bactérien, un composé anti-oxydant, un composé anti-fongique, un agent améliorateur de propriétés organoleptiques, un agent lubrifiant, un agent dispersant, un plastifiant.

**12.** Procédé de préparation d'une composition selon l'une quelconque des revendications 1 à 11 comprenant une étape d'extrusion, de préférence une étape d'extrusion-filage par voie fondue avantageusement au moyen d'un extrudeuse mono-vis.

**13.** Article obtenu par extrusion filage d'une composition selon l'une quelconque des revendications 1 à 11 ou obtenu suivant le procédé selon la revendication 12, ledit article étant choisi dans le groupe formé par les fils, mono-filaments, multi-filaments, fibres, crins, poils de cosmétique, filets, tresses, cordages, tissés, non-tissés, films, structures soufflées, profilés tubes, de préférence les mono-filaments.

**14.** Article selon la revendication 13 choisi parmi les engins de pêche ou les géotextiles **caractérisé en ce qu'**il est écoresponsable.

**15.** Article selon l'une quelconque des revendications 13 ou 14 **caractérisé en ce qu'**il est biodégradable et/ou recyclable en fin de vie.

**Patentansprüche**

**1.** Zusammensetzung, die folgendes umfasst:

- bezogen auf das Gesamtgewicht der Zusammensetzung 40 bis 90 % Massenanteil, vorzugsweise 50 bis 90 % Massenanteil mindestens eines steifen, biologisch abbaubaren (Co)Polyesters,
- bezogen auf das Gesamtgewicht der Zusammensetzung 10 bis 49 % Massenanteil mindestens eines flexiblen, biologisch abbaubaren (Co)Polyesters,
- bezogen auf das Gesamtgewicht der Zusammensetzung 0,5 bis 10 % Massenanteil eines Vinylpolymers, wobei die Zusammensetzung **dadurch gekennzeichnet ist, dass**
- die Differenz zwischen den Schmelztemperaturen der beiden biologisch abbaubaren (Co)Polyestern mit den am weitesten auseinander liegenden Schmelztemperaturen kleiner 25°C, vorzugsweise kleiner 15°C, besonders bevorzugt kleiner 10°C ist, wobei die Schmelztemperaturen nach der ISO-Norm 3146 bestimmt werden,
- die Differenz zwischen den Schmelzindizes der beiden biologisch abbaubaren (Co)Polyester mit den am weitesten auseinander liegenden Schmelzindizes kleiner 5g/10min, vorzugsweise kleiner 3g/10min ist, wobei die Schmelzindizes nach der ISO-Norm 1133 bestimmt werden,
wobei ein steifer (Co)polyester ein Polymer mit einem Steifigkeitsmodul größer 500 MPa, vorzugsweise größer 600 MPa, und einer Bruchdehnung kleiner 300 %, vorzugsweise kleiner 250 % ist,
wobei ein flexibler (Co)polyester ein Polymer mit einem Steifigkeitsmodul kleiner 850 MPa, vorzugsweise kleiner 700 MPa, und einer Reißdehnung größer 100 %, vorzugsweise größer 200 % ist,
wobei die Steifigkeitsmodule und die Reißdehnungen nach der Norm NF EN ISO 527-1 bestimmt werden,
wobei, wenn die Zusammensetzung einen biologisch abbaubaren (Co)polyester mit einem Steifigkeitsmodul zwischen 500 und 850 MPa und einer Reißdehnung zwischen 100 und 300 % umfasst, sie auch entweder mindestens einen (Co)polyester mit einem Steifigkeitsmodul größer 850 MPa und einer Reißdehnung kleiner 100 % bzw. mindestens einen (Co)polyester mit einem Steifigkeitsmodul kleiner 500 MPa und einer Reißdehnung größer 300 % enthält.

2. Zusammensetzung nach Anspruch 1, **dadurch gekennzeichnet, dass** der steife, biologisch abbaubare (Co)Polyester aus einer Gruppe bestehend aus Polylactid, Polyglycolid, Poly(milch-co-glycolsäure), Poly(3-hydroxybutyrat), Poly(3-hydroxyvalerat), Poly(hydroxybutyrat-co-hydroxyvalerat), Poly(3-hydroxybutyrat-co-3-hydroxyhexanoat), Polybutylensuccinat, Poly(trimethylenterephthalat) und Poly(methylen-adipat-terephthalat) ausgewählt wird.

3. Zusammensetzung nach einem der Ansprüche 1 oder 2, **dadurch gekennzeichnet, dass** der flexible, biologisch abbaubare (Co)Polyester aus einer Gruppe bestehend aus plastifiziertem Polylactid, plastifiziertem Polyglycolid, plastifizierter Poly(milch-co-glycolsäure), Poly(3-hydroxypropionat), Poly(4-hydroxybutyrat), Poly(3-hydroxybutyrat-co-3-hydroxyhexanoat), Poly(3-hydroxybutyrat-co-3-hydroxyoctanoat), Poly(3-hydroxybutyrat-co-4-hydroxybutyrat), Polyhydroxyalkanoaten mit mittellangen Seitenketten, d. h. mit 3 bis 13 Kohlenstoffatomen, Polybutylensuccinat und seinen Copolymeren wie Poly(butylensuccinat-adipat), Poly(butylensuccinat-co-lactat), Polybutylensuccinat-co-terephthalat, Poly(butylensuccinat-co-$\varepsilon$-caprolacton), Polybutylenadipat-terephtalat oder Polybutyrat, Poly(methylen-adipat-terephthalat), Poly(butylensuccinat-adipate)-terephthalat, Polyethylenadipat sowie Poly($\varepsilon$-caprolacton) ausgewählt wird.

4. Zusammensetzung nach einem der vorhergehenden Ansprüche, **dadurch gekennzeichnet, dass** der steife, biologisch abbaubare (Co)polyester Polybutylensuccinat ist und der flexible, biologisch abbaubare (Co)polyester aus einer Gruppe bestehend aus Poly(butylensuccinat-adipat)-terephthalat, Polybutyrat oder Polybutylenadipat-terephthalat, Poly(butylensuccinat-adipat), Poly(3-hydroxybutyrat-co-3-hydroxyoctanoat), Poly(3-hydroxybutyrat-co-4-hydroxybutyrat), Polyhydroxyalkanoaten mit mittellangen Seitenketten, d. h. mit 3 bis 13 Kohlenstoffatomen, Poly(3-hydroxypropionat), Poly(4-hydroxybutyrat) ausgewählt wird; oder

der steife, biologisch abbaubare (Co)polyester Polylactid ist und der flexible, biologisch abbaubare (Co)polyester aus einer Gruppe bestehend aus Polybutylensuccinat, Poly(butylensuccinat-adipat)-terephthalat, Polybutyrat, Poly(butylensuccinat-adipat), Poly(3-hydroxybutyrat-co-3-hydroxyoctanoat), Poly(3-hydroxybutyrat-co-4-hydroxybutyrat), Polyhydroxyalkanoate mit mittellangen Seitenketten, d. h. mit 3 bis 13 Kohlenstoffatomen, Poly(3-hydroxypropionat), Poly(4-hydroxybutyrat) ausgewählt wird oder
der steife, biologisch abbaubare (Co)polyester aus einer Gruppe bestehend aus Poly(3-hydroxybutyrat), Poly(3-hydroxyvalerat), Poly(hydroxybutyrat-co-hydroxyvalerat) und Poly(3-hydroxybutyrat-co-3-hydroxyhexanoat) und der flexible, biologisch abbaubare (Co)polyester aus einer Gruppe bestehend aus Polybutylensuccinat, Poly(butylensuccinatadipat)-terephthalat, Polybutyrat, Poly(butylensuccinat-adipat), Poly(3-hydroxybutyrat-co-3-hydroxyoctanoat ), Poly(3-hydroxybutyrat-co-4-hydroxybutyrat), Polyhydroxyalkanoaten mit mittellangen Seitenketten, d. h. mit 3 bis 13 Kohlenstoffatomen, Poly(3-hydroxypropionat) und Poly(4-hydroxybutyrat) ausgewählt wird.

5. Zusammensetzung nach einem der Ansprüche 1 bis 4, **dadurch gekennzeichnet, dass** der steife, biologisch abbaubare (Co)polyester Polybutylensuccinat, und der flexible, biologisch abbaubare (Co)polyester Polybutyrat oder Polybutylenadipat-terephthalat ist.

6. Zusammensetzung nach dem vorhergehenden Anspruch, **dadurch gekennzeichnet, dass** sie bezogen auf das Gesamtgewicht der Zusammensetzung 60 bis 80 % Massenanteil, vorzugsweise 65 bis 75 % Massenanteil und vorteilhafterweise etwa 70 % Massenanteil steifen, biologisch abbaubaren (Co)polyester, und bezogen auf das Gesamtgewicht der Zusammensetzung 20 bis 40 % Massenanteil, vorzugsweise 25 bis 35 % Massenanteil und vorteilhafterweise etwa 30 % Massenanteil flexiblen, biologisch abbaubaren (Co)polyester umfasst.

7. Zusammensetzung nach einem der Ansprüche 1 bis 4, **dadurch gekennzeichnet, dass** der steife biologisch abbaubare (Co)Polyester Polylactid und der flexible, biologisch abbaubare (Co)Polyester Polybutylensuccinat ist.

8. Zusammensetzung nach dem vorhergehenden Anspruch, **dadurch gekennzeichnet, dass** sie bezogen auf das Gesamtgewicht der Zusammensetzung 69 bis 88 % Massenanteil und vorteilhafterweise etwa 88 % Massenanteil steifen, biologisch abbaubaren (Co)Polyester, und bezogen auf das Gesamtgewicht der Zusammensetzung 10 bis 30 % Massenanteil und vorteilhafterweise etwa 10 % Massenanteil flexiblen, biologisch abbaubaren (Co)Polyester umfasst.

9. Zusammensetzung nach einem der Ansprüche 1 bis 8, **dadurch gekennzeichnet, dass** das Vinylpolymer ausgewählt wird aus Polyvinylacetat, gepfropftem Polyvinylacetat, Polyvinylacetat und gepfropftem Ethylenpolyvinylacetat, vorzugsweise Polyvinylacetat.

10. Zusammensetzung nach einem der Ansprüche 1 bis 9, **dadurch gekennzeichnet, dass** die Menge an Vinylpolymer bezogen auf das Gesamtgewicht der Zusammensetzung 1 bis 5 % Massenanteil, vorzugsweise 1 bis 3 % Massenanteil ausmacht.

11. Zusammensetzung nach einem der Ansprüche 1 bis 10, **dadurch gekennzeichnet, dass** sie mindestens einen Zusatzstoff enthält, der aus einer Gruppe bestehend aus einer kettenverlängernden Verbindung, einem Pfropfmittel, einer mineralischen Verstärkung, einer pflanzlichen Verstärkung, einer Verstärkung tierischen Ursprungs, einer Fettsäure, einer flammhemmenden Verbindung, einer Anti-Ultraviolett-Verbindung, einer antibakteriellen Verbindung, einer Antioxydans-Verbindung, einer Anti-Pilz-Verbindung, einem Mittel zur Verbesserung der organoleptischen Eigenschaften, einem Gleitmittel, einem Dispergiermittel und einem Weichmacher ausgewählt wird.

12. Verfahren zur Herstellung einer Zusammensetzung nach einem der Ansprüche 1 bis 11, welches einen Schritt der Extrusion, vorzugsweise einen Schritt des Extrusionsspinnens durch Schmelzen, vorteilhafterweise mittels eines Einschneckenextruders umfasst.

13. Erzeugnis, das durch Extrusionsspinnen einer Zusammensetzung nach einem der Ansprüche 1 bis 11 oder nach dem Verfahren nach Anspruch 12 erhalten wird, wobei das Erzeugnis aus der Gruppe bestehend aus Garnen, Monofilamenten, Multifilamenten, Fasern, Rosshaar, Kosmetikhaar, Netzen, Geflechten, Seilen, Geweben, Vliesstoffen, Folien, geblasenen Strukturen, Rohrprofilen, vorzugsweise Monofilamenten ausgewählt wird.

14. Erzeugnis nach Anspruch 13, das aus Fischereiausrüstung oder Geotextilien ausgewählt wird, **dadurch gekennzeichnet, dass** es umweltverträglich ist.

15. Erzeugnis nach einem der Ansprüche 13 oder 14, **dadurch gekennzeichnet, dass** es am Ende seiner Lebensdauer biologisch abbaubar und/oder recycelbar ist.

**Claims**

1. Composition comprising:

   - from 40 to 90%, preferably from 50 to 90%, by weight, of at least one rigid biodegradable (co)polyester, based on the total weight of the composition,
   - from 10 to 49% by weight of at least one flexible biodegradable (co)polyester based on the total weight of the composition,
   - from 0.5 to 10% by weight of a vinyl polymer, based on the total weight of the composition, said composition being **characterised in that**
   - the difference in melting temperatures between the two biodegradable (co)polyesters with the furthest apart melting temperatures is less than 25°C, preferably less than 15°C, most preferably less than 10°C, the melting temperatures being determined according to ISO 3146,
   - the difference in melt flow rates between the two biodegradable (co)polyesters with the furthest apart melt flow rates is less than 5g/10min, preferably less than 3g/10min, the melt flow rates being determined according to ISO 1133,

a rigid (co)polyester being a polymer with a modulus of rigidity greater than 500 MPa, preferably greater than 600 MPa and an elongation at break of less than 300%, preferably less than 250%,

a flexible (co)polyester being a polymer with a modulus of rigidity greater than 850 MPa, preferably greater than 700 MPa and an elongation at break of less than 100%, preferably less than 200%,

the moduli of rigidity and elongation at break being determined according to NF EN ISO 527-1,

when the composition comprises a biodegradable (co)polyester with a stiffness modulus of between 500 and 850 MPa and an elongation at break of between 100 and 300%, then it also contains either at least one (co)polyester with a stiffness modulus of more than 850 MPa and an elongation at break of less than 100% or at least one (co)polyester with a stiffness modulus of less than 500 MPa and an elongation at break of more than 300%.

2.  Composition according to claim 1, **characterized in that** the rigid biodegradable (co)polyester is selected from the group formed by polylactide, polyglycolide, poly(lactic-coglycolic acid), poly(3-hydroxybutyrate), poly(3-hydroxyvalerate), poly(hydroxybutyrate-cohydroxyvalerate), poly(3-hydroxybutyrate-co-3-hydroxyhexanoate), polybutylene succinate, poly(trimethylene terephthalate), poly(methylene adipate terephthalate).

3.  A composition according to either of claims 1 and 2, **characterized in that** the flexible biodegradable (co)polyester is chosen from the group formed by plasticized polylactide, plasticized polyglycolide, plasticized poly(lactic-co-glycolic acid), poly(3-hydroxypropionate), poly(4-hydroxybutyrate), poly(3-hydroxybutyrate-co-3-hydroxyhexanoate), poly(3-hydroxybutyrate-co-3-hydroxyoctanoate), poly(3-hydroxybutyrate- co-4-hydroxybutyrate), polyhydroxyalkanoates with a side chain of medium length, that is to say ranging from 3 to 13 carbon atoms, polybutylene succinate and its copolymers such as poly(butylene succinate adipate, poly(butylenesuccinate-co-lactate), polybutylene adipate-co-terephthalate, poly(butylene succinate-co- ε-caprolactone), polybutylene adipate terephthalate or polybutyrate, poly(methylene adipate terephthalate), poly(butylene succinate adipate) terephthalate, polyethylene adipate and poly(ε-caprolactone).

4.  A composition according to any one of the preceding claims **characterised in that** the rigid biodegradable (co)polyester is polybutylene succinate and the flexible biodegradable (co)polyester is selected from the group consisting of poly(butylene succinate adipate) terephthalate, polybutyrate or polybutylene adipate terephthalate, poly(butylene succinate adipate), poly(3-hydroxybutyrate-co-3-hydroxyoctanoate), poly(3-hydroxybutyrate-co-4-hydroxybutyrate), polyhydroxyalkanoates of medium side chain length, i.e. of 3 to 13 carbon atoms, poly(3-hydroxypropionate), poly(4-hydroxybutyrate); or the rigid biodegradable (co)polyester is polylactide and the flexible biodegradable (co)polyester is selected from the group consisting of polybutylene succinate, poly(butylene succinate adipate) terephthalate, polybutyrate, poly(butylene succinate adipate), poly(3-hydroxybutyrate-co-3-hydroxyoctanoate) poly(3-hydroxybutyrate-co-4-hydroxybutyrate), polyhydroxyalkanoates of medium side chain length i.e. from 3 to 13 carbon atoms, poly(3-hydroxypropionate), poly(4-hydroxybutyrate) or rigid biodegradable (co)polyester is selected from the group consisting of poly(3-hydroxybutyrate) poly(3-hydroxyvalerate), poly(hydroxybutyrate-co-hydroxyvalerate) and poly(3-hydroxybutyrate-co-3-hydroxyhexanoate) and the flexible biodegradable (co)polyester is selected from the group consisting of polybutylene succinate, poly(butylene succinate adipate) terephthalate, polybutyrate, poly(butylene succinate adipate), poly(3-hydroxybutyrate-co-3-hydroxyoctanoate), poly(3-hydroxybutyrate-co-4-hydroxybutyrate), polyhydroxyalkanoates of medium side chain length, i.e. from 3 to 13 carbon atoms, poly(3-hydroxypropionate), poly(4-hydroxybutyrate).

5.  A composition according to any one of claims 1 to 4 **characterised in that** the rigid biodegradable (co)polyester is polybutylene succinate and the flexible biodegradable (co)polyester is polybutylene adipate terephthalate or polybutyrate.

6.  A composition according to the preceding claim, **characterized in that** it comprises from 60 to 80%, preferably from 65 to 75% and advantageously about 70% by weight of rigid biodegradable (co)polyester relative to the total weight of the composition and from 20 to 40%, preferably from 25 to 35% and advantageously about 30% of flexible biodegradable (co)polyester by weight relative to the total weight of the composition.

7.  A composition according to any one of claims 1 to 4 **characterised in that** the rigid biodegradable (co)polyester is polylactide and the flexible biodegradable (co)polyester is polybutylene succinate.

8.  A composition according to the preceding claim, **characterized in that** it comprises from 69 to 88% and advantageously about 88% by weight of rigid biodegradable (co)polyester relative to the total weight of the composition and from 10 to 30% and advantageously about 10% of flexible biodegradable (co)polyester by weight relative to the total weight of the composition.

9. A composition according to any one of claims 1 to 8 **characterised in that** the vinyl polymer is selected from polyvinyl acetate, grafted polyvinyl acetate, polyvinyl acetate and grafted ethylene polyvinyl acetate, preferably polyvinyl acetate.

10. A composition according to any one of claims 1 to 9, **characterized in that** the amount of vinyl polymer is from 1 to 5%, preferably from 1 to 3% by weight, based on the total weight of the composition.

11. Composition according to any one of claims 1 to 10, **characterized in that** it contains at least one additive selected from the group formed by a chain-extending compound, a grafting agent, a mineral reinforcement, a vegetable reinforcement, a reinforcement of animal origin, a fatty acid, a flame retardant compound, an anti-ultraviolet compound, an anti-bacterial compound, an anti-oxidant compound, an anti-fungal compound, an agent for improving organoleptic properties, a lubricating agent, a dispersing agent, a plasticiser.

12. A process for preparing a composition according to any one of claims 1 to 11 comprising an extrusion step, preferably a melt extrusion step advantageously by means of a single screw extruder.

13. An article obtained by extrusion spinning of a composition according to any one of claims 1 to 11 or obtained according to the process according to claim 12, said article being selected from the group formed by yarns, monofilaments, multifilaments, fibres, bristles, cosmetic bristles, nets, braids, ropes, wovens, nonwovens, films, blown structures, tubular profiles, preferably monofilaments.

14. An article according to claim 13 selected from fishing gear or geotextiles **characterised in that** it is environmentally responsible.

15. An article according to any one of claims 13 or 14 **characterised in that** it is biodegradable and/or recyclable at the end of its life.

Composition B                                                 Composition A

FIG.1

Composition B                                                 Composition A

FIG.2

FIG.3

FIG. 4

Tube ø5,0mm

Monofilament ø0,80mm

Monofilament ø0,65mm

Monofilament ø0,22mm

Monofilament ø0,22mm brun

FIG. 5

FIG. 6

FIG. 7

**EP 3 560 996 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9923163 A
- JP 2011234718 A
- FR 3040389 A1